(19) Europäisches Patentamt
European Patent Office
Office européen des brevets

(11) **EP 4 617 901 A1**

(12) **EUROPEAN PATENT APPLICATION**
published in accordance with Art. 153(4) EPC

(43) Date of publication:
**17.09.2025 Bulletin 2025/38**

(21) Application number: **23899563.3**

(22) Date of filing: **26.09.2023**

(51) International Patent Classification (IPC):
***G06F 16/242*** (2019.01)

(52) Cooperative Patent Classification (CPC):
**G06F 16/242; G06F 16/2453; G06F 16/2455;**
**G06F 16/28**

(86) International application number:
**PCT/CN2023/121360**

(87) International publication number:
**WO 2024/119980 (13.06.2024 Gazette 2024/24)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **07.12.2022 CN 202211565695**

(71) Applicant: **Huawei Cloud Computing**
**Technologies Co., Ltd.**
**Guiyang, Guizhou 550025 (CN)**

(72) Inventors:
• **ZHONG, Yanhui**
  **Guiyang, Guizhou 550025 (CN)**
• **JI, Xianghu**
  **Guiyang, Guizhou 550025 (CN)**
• **ZENG, Kai**
  **Guiyang, Guizhou 550025 (CN)**
• **WANG, Chuanting**
  **Guiyang, Guizhou 550025 (CN)**
• **ZHANG, Wenliang**
  **Guiyang, Guizhou 550025 (CN)**
• **REN, Bo**
  **Guiyang, Guizhou 550025 (CN)**
• **HUANG, Haiyan**
  **Guiyang, Guizhou 550025 (CN)**

(74) Representative: **Pfenning, Meinig & Partner mbB**
**Patent- und Rechtsanwälte**
**Theresienhöhe 11a**
**80339 München (DE)**

(54) **DATA ANALYSIS METHOD AND RELATED DEVICE**

(57) This application provides a data analysis method, performed by a data analysis system. The system includes a coordinator node, a metadata management apparatus, and a plurality of computing clusters. The computing cluster includes a metadata cache. The metadata management apparatus records a status of the metadata cache. The method includes: The coordinator node receives a query statement, and delivers a consistency determining request to the metadata management apparatus. The metadata management apparatus obtains a consistency determining result of a metadata cache of at least one computing cluster based on the status of the metadata cache, then returns the consistency determining result to the coordinator node, and next determines a target computing cluster from the plurality of computing clusters based on the consistency determining result. The target computing cluster performs data analysis according to an analysis request delivered by the coordinator node. Because metadata does not need to be carried in a delivered execution plan, a network requirement is lowered. In addition, because data can be accurately obtained based on the consistency determining result, a quantity of times of synchronization is reduced, and a network requirement is lowered.

FIG. 3

EP 4 617 901 A1

**Description**

This application claims priority to Chinese Patent Application No. 202211565695.9, filed with the China National Intellectual Property Administration on December 7, 2022 and entitled "DATA ANALYSIS METHOD AND RELATED DEVICE", which is incorporated herein by reference in its entirety.

**TECHNICAL FIELD**

This application relates to the field of data processing technologies, and in particular, to a data analysis method and system, a computing device cluster, a computer-readable storage medium, and a computer program product.

**BACKGROUND**

A data warehouse (data warehouse) is a central repository of integrated data that comes from one or more different data sources. Different from a conventional database used for routine transaction processing, the data warehouse is used to support complex analysis operations and provide intuitive and understandable query results. With continuous development of cloud native (cloud native) technologies, major cloud vendors further launch a cloud-native data warehouse to fully utilize cloud infrastructure and improve an elastic scaling capability of a system. The cloud-native data warehouse usually uses an architecture in which storage is decoupled from computing (a decoupled storage-compute architecture), that is, a storage layer is decoupled from a computing layer, and resources at each layer are independently scaled.

With a continuous increase in a data amount, a user also has an increasingly high requirement for concurrent analysis. The industry proposes a multi-computing cluster architecture, for example, a multi-virtual warehouse (virtual warehouse, VW) architecture, to improve a concurrency capability. The multi-VW architecture includes a cloud services (cloud services) layer, a virtual warehouse (VW) layer, and a storage layer. At the storage layer, data may be stored in a data partition. In some examples, data may be stored in the data partition in column-store mode. The VW layer includes a plurality of VWs. Each VW includes at least one node (node). Each node may include an executor (executor) and a cache of a data partition (that is, a data cache). At the cloud services layer, a metadata cache (metadata cache) is built. The metadata cache stores column-store metadata (metadata stored in column-store mode). When receiving a query statement (query for short), an optimizer (optimizer) at the cloud services layer triggers metadata consistency synchronization, to synchronize metadata from a metadata cluster to the metadata cache, and ensure that all read data is data submitted after the latest modification. In this way, the optimizer can perform optimization based on the data submitted after the latest modification and deliver an execution plan, and the VW executes the execution plan.

However, in the foregoing solution, the delivered execution plan needs to carry metadata of all data partitions that meet a requirement. Consequently, a requirement for node bandwidth at the cloud services layer and the VW layer increases, costs are high, and a service requirement cannot be met.

SUMMARY

In view of the foregoing problems, this application provides a data analysis method. In the method, metadata is cached in a computing cluster, and a coordinator node does not need to incorporate metadata into a delivered execution plan, so that a network requirement is lowered. In addition, a metadata management apparatus records a status of a metadata cache, performs consistency determining based on the status of the metadata cache, and may schedule an analysis request to an appropriate computing cluster based on a consistency determining result, to reduce a quantity of times of querying and synchronization, and further lower a network requirement and a query performance requirement. This application further provides a data analysis system, a computing device cluster, a computer-readable storage medium, and a computer program product that correspond to the foregoing data analysis method.

According to a first aspect, this application provides a data analysis method. The method may be performed by a data analysis system. The data analysis system may be a software system or a hardware system. When the data analysis system is a software system, for example, a data warehouse software system, the software system may be deployed in a computing device cluster, and the computing device cluster executes program code of the software system, to perform the data analysis method in this application. When the data analysis system is a hardware system, for example, a cloud-native data warehouse, the hardware system may perform the data analysis method in this application during running.

The data analysis system includes a coordinator node, a metadata management apparatus, and a plurality of computing clusters. Each of the plurality of computing clusters includes at least one data node. The computing cluster includes a metadata cache, and the metadata management apparatus records a status of the metadata cache. Similar to the computing cluster, the metadata management apparatus may also be in a cluster form. For example, the metadata management apparatus may be a metadata cluster.

Specifically, the coordinator node receives a query statement, and delivers a consistency determining request to the metadata management apparatus. Then, in response to the consistency determining request, the metadata management apparatus obtains a consistency determining result of a metadata cache of at least one computing cluster among the plurality of computing clusters based on the status of the metadata cache, and then returns the consistency determining result to the coordinator node. The coordinator node determines a target computing cluster from the plurality of computing clusters based on the consistency determining result. The target computing cluster performs data analysis according to an analysis request delivered by the coordinator node.

In the method, the computing cluster caches metadata, and no metadata needs to be carried in a delivered execution plan, so that a network requirement is lowered. The metadata management apparatus records the status of the metadata cache. When data analysis needs to be performed, consistency of a metadata cache of at least one computing cluster among the plurality of computing clusters may be determined based on the status of the metadata cache. Based on a consistency determining result, an analysis request may be scheduled to an appropriate computing cluster for execution. In this way, a quantity of times of querying whether metadata is latest metadata can be reduced, so that a quantity of times of synchronizing latest metadata from the metadata management apparatus to the metadata cache is reduced, a network requirement is lowered, and a requirement for metadata query performance is lowered. Further, the metadata management apparatus may perform visibility determining based on metadata, to meet a requirement of a higher transaction isolation level.

In some possible implementations, the consistency determining request includes a conditional predicate of the query statement. Correspondingly, the metadata management apparatus may determine, based on the conditional predicate, metadata to be read by the query statement, and then the metadata management apparatus determines a query condition based on the metadata to be read by the query statement. The query condition may include version information and a metadata identifier. The metadata identifier may include a column identifier and one or more of a block identifier and a group identifier. The block identifier is used to identify a data block, and the group identifier is used to identify a group of a plurality of data blocks. The metadata management apparatus may determine the status of the metadata cache based on the query condition, to obtain the consistency determining result.

Specific computing clusters caching metadata that is consistent with metadata stored in the metadata management apparatus may be quickly determined based on the consistency determining result. This can help the coordinator node schedule the analysis request to an appropriate computing cluster, so that a quantity of times that the computing cluster queries whether metadata is of a latest version is reduced, and a quantity of times that the computing cluster synchronizes metadata from the metadata management apparatus is reduced.

In some possible implementations, the metadata management apparatus stores at least one piece of metadata, and each piece of metadata records a data range of at least one data block. The data range may be a range from a minimum value to a maximum value (including two endpoints: the minimum value and the maximum value) in the data block. Correspondingly, the metadata management apparatus may query, based on the conditional predicate, the metadata stored in the metadata management apparatus, and determine the metadata to be read by the query statement. A data range of at least one data block in the metadata to be read by the query statement meets a requirement of the conditional predicate.

That the data range of the at least one data block in the metadata to be read by the query statement meets the requirement of the conditional predicate may be that there is an intersection between a range of the at least one data block and a range corresponding to the conditional predicate. For example, when the conditional predicate is id > 20 and the range of the at least one data block is 1 to 100, the data range of the at least one data block in the metadata to be read by the query statement meets the conditional predicate.

In the method, the metadata stored in the metadata management apparatus is queried based on the conditional predicate, and the metadata to be read by the query statement is determined, so that query pruning can be implemented, unnecessary metadata does not need to be obtained, and a network requirement is lowered.

In some possible implementations, the metadata management apparatus performs transaction visibility determining based on the metadata stored in the metadata management apparatus, to determine metadata of data whose transaction visibility meets a transaction isolation level, and then obtains, based on the conditional predicate from the metadata of the data whose transaction visibility meets the transaction isolation level, the metadata to be read by the query statement.

This not only implements query pruning, but also supports visibility determining based on metadata, to meet requirements of higher transaction isolation levels such as a repeatable read RR level, a snapshot isolation SI level, and a serializable snapshot isolation SSI level, without being limited to a read committed RC level.

In some possible implementations, the metadata management apparatus stores one or more of block-level metadata or block group-level metadata. The block-level metadata is metadata of a data block, and the block group-level metadata is metadata of a group of a plurality of data blocks.

The method supports consistency determining on metadata at different granularities, and supports synchronization or eviction of metadata at a block granularity or a group granularity, so that requirements of different services can be met.

In some possible implementations, the metadata management apparatus records the status of the metadata cache by using cache status data. The cache status data includes transaction header information, a metadata identifier, and a cache location of metadata. The transaction header information may serve as version information. The metadata identifier includes a column identifier and at least one of a block identifier and a group identifier. The cache location of the metadata is represented by a computing cluster identifier.

In the method, the transaction header information and the metadata identifier may serve as keys, and the cache location of the metadata may serve as a value. In this way, after determining the metadata to be read by the query statement, the metadata management apparatus may quickly determine, based on the metadata identifier and the version information, specific computing clusters caching metadata that is consistent with the metadata stored in the metadata management apparatus, so that the coordinator node schedules the analysis request to an appropriate computing cluster. This reduces a quantity of times that the computing cluster queries whether metadata is of a latest version, and reduces a quantity of times that the computing cluster synchronizes metadata from the metadata management apparatus.

In some possible implementations, the coordinator node may determine, based on the consistency determining result, a cost of performing data analysis by at least one computing cluster among the plurality of computing clusters, and then the coordinator node may determine the target computing cluster based on the cost of performing data analysis by the at least one computing cluster.

In the method, the cost of performing data analysis by the at least one computing cluster is determined, so that the analysis request is scheduled to an appropriate computing cluster for execution, to reduce data analysis overheads. Further, when determining the target computing cluster, the coordinator node may alternatively determine the target computing cluster based on a load balancing policy and load of each computing cluster. For example, the coordinator node may determine, based on the cost of performing data analysis by the at least one computing cluster and load of the at least one computing cluster, a computing cluster whose cost and load meet a requirement as the target computing cluster. This can implement load balancing between computing clusters, and repeatedly improve resource utilization of each computing cluster.

In some possible implementations, the cost of performing data analysis by the at least one computing cluster includes a base cost of the computing cluster and a cost of reading the metadata cache by the computing cluster. Correspondingly, the coordinator node may determine, as the target computing cluster, a computing cluster whose data analysis cost is the smallest or is less than a preset value among the at least one computing cluster.

In this way, data analysis can be performed at a low cost, so that data analysis costs are reduced, and a service requirement is met.

In some possible implementations, the analysis request includes an execution plan and the consistency determining result. That the target computing cluster performs data analysis according to an analysis request delivered by the coordinator node may be: The target computing cluster queries the metadata cache based on the consistency determining result, to obtain the metadata to be read by the query statement. Then the target computing cluster reads data based on the metadata to be read by the query statement, and performs data analysis on the data based on the execution plan.

In the method, the target computing cluster may correspondingly obtain, from the metadata cache or the metadata management apparatus based on the consistency determining result, the metadata to be read by the query statement; and read, based on the metadata, data for data analysis. The coordinator node does not need to deliver metadata or frequently synchronize metadata from the metadata management apparatus, so that a network requirement is lowered.

In some possible implementations, when the metadata to be read by the query statement is hit in the metadata cache, the target computing cluster obtains, from the metadata cache, the metadata to be read by the query statement; or when the metadata to be read by the query statement is not hit in the metadata cache, the target computing cluster obtains, from the metadata management apparatus, the metadata to be read by the query statement.

In one aspect, in the method, a quantity of times that the target computing cluster queries, from the metadata management apparatus, whether metadata is of a latest version is reduced, and a requirement for query performance is lowered. In another aspect, in the method, metadata that is hit in the metadata cache can be obtained from the metadata cache, so that a quantity of times of synchronizing metadata from the metadata management apparatus is reduced, and a network requirement is lowered.

In some possible implementations, the metadata management apparatus may further determine, based on the status of the metadata cache, an expired status record or a status record that is earliest written when the metadata cache exceeds a watermark. Then the metadata management apparatus may delete the expired status record and the status record that is earliest written when the metadata cache exceeds the watermark, and send the deleted status record to at least one computing cluster among the plurality of computing clusters. Then the at least one computing cluster may evict corresponding metadata based on the deleted status record.

In the method, the metadata management apparatus triggers eviction of the metadata cache in the computing cluster based on the status of the metadata cache, so that the metadata cache can cache metadata of newly written data, to support efficient analysis on the newly written data.

In some possible implementations, the metadata management apparatus may further group the statuses of the metadata cache based on the computing cluster identifier, and then the metadata management apparatus may separately determine, for at least one group, an expired status record or a status record that is earliest written when the metadata cache exceeds the watermark.

In the method, the status of the metadata cache is grouped based on the cluster identifier, and a corresponding watermark is set for each group. In this way, corresponding metadata can be evicted for each group, to improve eviction accuracy.

Further, the metadata management apparatus may perform grouping based on a node identifier. For example, the metadata management apparatus may group the status of the metadata cache based on the cluster identifier and the node identifier. This can further decrease a grouping granularity and implement refine-grained grouping, to improve eviction accuracy.

In some possible implementations, when the at least one computing cluster caches incremental metadata, the metadata management apparatus updates the status of the metadata cache based on cache information of the incremental metadata.

In the method, the incremental metadata is updated into the cache status data in the background, or is inserted into the cache status data along with transaction committing after transaction information is removed. This can ensure accuracy of subsequent cache consistency determining.

In some possible implementations, the computing cluster includes a virtual warehouse. The virtual warehouse points to data and does not copy or move any data, but only saves an index to the data. In this way, a data control right can be ensured, and analysis costs can be controlled.

In some possible implementations, the computing cluster may alternatively be a logical cluster. The logical cluster is a cluster mode in which physical nodes are divided based on a node group mechanism. A large cluster is divided at a node level, and each node group forms a logical cluster. In this way, high concurrency can be implemented.

According to a second aspect, this application provides a data analysis system. The data analysis system includes a coordinator node, a metadata management apparatus, and a plurality of computing clusters. The computing cluster includes a metadata cache. The metadata management apparatus records a status of the metadata cache.

The coordinator node is configured to receive a query statement, and deliver a consistency determining request to the metadata management apparatus.

The metadata management apparatus is configured to: in response to the consistency determining request, obtain a consistency determining result of a metadata cache of at least one computing cluster among the plurality of computing clusters based on the status of the metadata cache, and then return the consistency determining result to the coordinator node.

The coordinator node is further configured to determine a target computing cluster from the plurality of computing clusters based on the consistency determining result.

The target computing cluster is configured to perform data analysis according to an analysis request delivered by the coordinator node.

In some possible implementations, the consistency determining request includes a conditional predicate of the query statement; and
the metadata management apparatus is specifically configured to:

  determine, based on the conditional predicate, metadata to be read by the query statement;
  determine a query condition based on the metadata to be read by the query statement; and
  determine the status of the metadata cache based on the query condition, to obtain the consistency determining result.

In some possible implementations, the metadata management apparatus stores at least one piece of metadata, each piece of metadata records a data range of at least one data block, and the metadata management apparatus is specifically configured to:
query, based on the conditional predicate, the metadata stored in the metadata management apparatus, and determine the metadata to be read by the query statement, where a data range of at least one data block in the metadata to be read by the query statement meets a requirement of the conditional predicate.

In some possible implementations, the metadata management apparatus is specifically configured to:

  perform transaction visibility determining based on the metadata stored in the metadata management apparatus, to determine metadata of data whose transaction visibility meets a transaction isolation level; and
  obtain, based on the conditional predicate from the metadata of the data whose transaction visibility meets the transaction isolation level, the metadata to be read by the query statement.

In some possible implementations, the metadata management apparatus stores one or more of block-level metadata or block group-level metadata.

In some possible implementations, the metadata management apparatus records the status of the metadata cache by using cache status data, the cache status data includes transaction header information, a metadata identifier, and a cache location of metadata, the metadata identifier includes a column identifier and at least one of a block identifier and a group identifier, and the cache location of the metadata is represented by a computing cluster identifier.

In some possible implementations, the coordinator node is specifically configured to:

determine, based on the consistency determining result, a cost of performing data analysis by at least one computing cluster among the plurality of computing clusters; and
determine the target computing cluster based on the cost of performing data analysis by the at least one computing cluster.

In some possible implementations, the cost of performing data analysis by the at least one computing cluster includes a base cost of the computing cluster and a cost of reading the metadata cache by the computing cluster; and the coordinator node is specifically configured to:
determine, as the target computing cluster, a computing cluster whose data analysis cost is the smallest or is less than a preset value among the at least one computing cluster.

In some possible implementations, the analysis request includes an execution plan and the consistency determining result; and
the target computing cluster is specifically configured to:

query the metadata cache based on the consistency determining result, to obtain the metadata to be read by the query statement; and
read data based on the metadata to be read by the query statement, and perform data analysis on the data based on the execution plan.

In some possible implementations, the target computing cluster is specifically configured to:

when the metadata to be read by the query statement is hit in the metadata cache, obtain, from the metadata cache, the metadata to be read by the query statement; or
when the metadata to be read by the query statement is not hit in the metadata cache, obtain, from the metadata management apparatus, the metadata to be read by the query statement.

In some possible implementations, the metadata management apparatus is further configured to:

determine, based on the status of the metadata cache, an expired status record or a status record that is earliest written when the metadata cache exceeds a watermark;
delete the expired status record and the status record that is earliest written when the metadata cache exceeds the watermark; and
send the deleted status record to at least one computing cluster among the plurality of computing clusters; and
the at least one computing cluster is further configured to:
evict corresponding metadata based on the deleted status record.

In some possible implementations, the metadata management apparatus is further configured to:

group the status of the metadata cache based on the computing cluster identifier; and
the metadata management apparatus is specifically configured to:
separately determine, for at least one group, an expired status record or a status record that is earliest written when the metadata cache exceeds the watermark.

In some possible implementations, the metadata management apparatus is further configured to:
when the at least one computing cluster caches incremental metadata, update the status of the metadata cache based on cache information of the incremental metadata.

In some possible implementations, the computing cluster includes a virtual warehouse.

According to a third aspect, this application provides a computing device cluster. The computing device cluster includes at least one computing device, and the at least one computing device includes at least one processor and at least one memory. The at least one processor and the at least one memory communicate with each other. The at least one processor is configured to execute instructions stored in the at least one memory, to enable a computer device or the computing device cluster to perform the data analysis method according to any one of the first aspect or the implementations of the first aspect.

According to a fourth aspect, this application provides a computer-readable storage medium. The computer-readable storage medium stores instructions. The instructions instruct a computer or a computing device cluster to perform the data analysis method according to any one of the first aspect or the implementations of the first aspect.

According to a fifth aspect, this application provides a computer program product including instructions. When the instructions are run on a computer or a computing device cluster, the computer or the computing device cluster is enabled to perform the data analysis method according to any one of the first aspect or the implementations of the first aspect.

In this application, based on the implementations provided in the foregoing aspects, the implementations may be further combined to provide more implementations.

## BRIEF DESCRIPTION OF DRAWINGS

To describe technical methods in embodiments of this application more clearly, the following briefly describes accompanying drawings to be used in embodiments.

FIG. 1 is a schematic flowchart of data analysis according to an embodiment of this application;
FIG. 2 is a diagram of a multi-virtual-warehouse architecture according to an embodiment of this application;
FIG. 3 is a diagram of an architecture of a data analysis system according to an embodiment of this application;
FIG. 4 is a diagram of a relationship between group metadata and block metadata according to an embodiment of this application;
FIG. 5 is a diagram of a structure of a hierarchical transaction tree according to an embodiment of this application;
FIG. 6 is a flowchart of a data analysis method according to an embodiment of this application;
FIG. 7 is a diagram of a process of processing concurrent transactions according to an embodiment of this application;
FIG. 8 is a diagram of an application scenario of a data analysis method according to an embodiment of this application;
FIG. 9 is a diagram of an application scenario of another data analysis method according to an embodiment of this application;
FIG. 10 is a diagram of determining a target computing cluster according to an embodiment of this application;
FIG. 11 is a diagram of constructing and managing a cache at a multi-layer granularity according to an embodiment of this application;
FIG. 12 is a schematic flowchart of evicting a metadata cache according to an embodiment of this application;
FIG. 13 is a schematic flowchart of updating a status of a metadata cache according to an embodiment of this application;
FIG. 14 is a diagram of a metadata cache update process according to an embodiment of this application;
FIG. 15 is an interaction flowchart of a data analysis method according to an embodiment of this application;
FIG. 16 is a diagram of a structure of a computing device according to an embodiment of this application;
FIG. 17 is a diagram of a structure of a computing device cluster according to an embodiment of this application;
FIG. 18 is a diagram of a structure of another computing device cluster according to an embodiment of this application; and
FIG. 19 is a diagram of a structure of still another computing device cluster according to an embodiment of this application.

## DESCRIPTION OF EMBODIMENTS

The terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more features.

In a data analysis scenario, with a continuous increase in a data size, a user also has an increasingly high requirement for concurrent analysis. However, a data warehouse with a single-computing-cluster architecture has a limited concurrency capability due to a limitation of resource contention and synchronization collaboration. Therefore, scaling to a plurality of computing clusters to improve a concurrency capability becomes a technical choice. In a multi-computing-cluster architecture, a user may perform concurrent analysis through a unified entry. A cloud-native data warehouse internally schedules requests to different computing clusters for analysis.

To ensure reliability of an analysis result, usually, data analysis freshness (measured by using time spent in capturing and processing hit events of massive data) needs to be 0, and a requirement of a transaction isolation level needs to be met. To be specific, data written and committed by a user can be immediately detected and analyzed. A computing cluster needs to query latest metadata from a metadata cluster each time, to determine whether data to be analyzed is the latest.

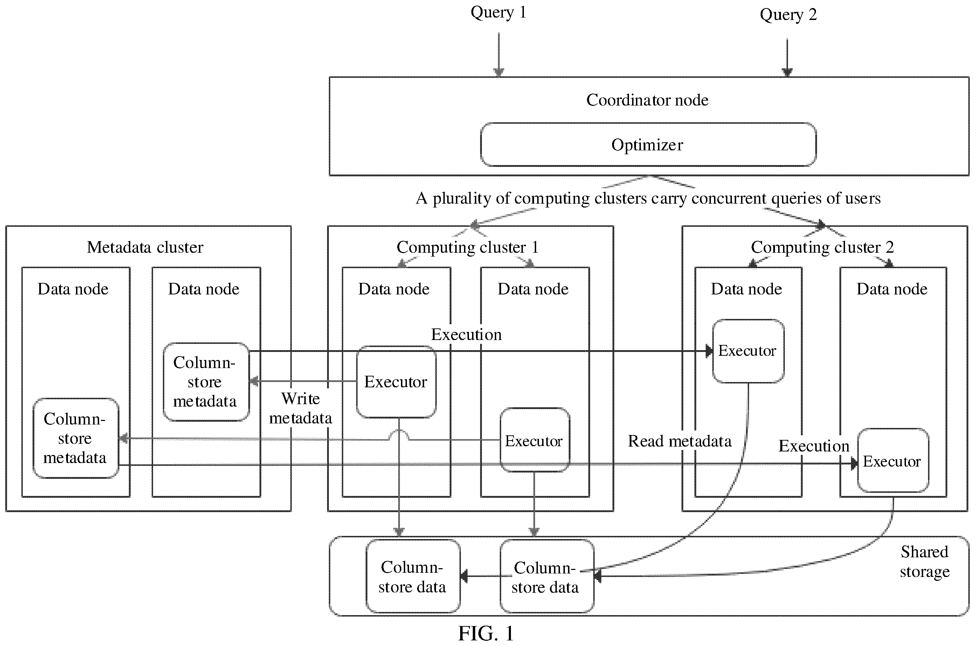

For ease of understanding, descriptions are provided below with reference to an example. Refer to a schematic flowchart of data analysis in FIG. 1. A user performs two concurrent analysis operations: update (update) and select (select). The operations are specifically as follows: Update t1 set id+10 where id > 1000000, and Select * from t1 where t1.id < 1000000. The Update operation is performed in a computing cluster 1. Data is written to shared storage, and metadata is written to a metadata cluster. The Select operation is performed in a computing cluster 2. To ensure that latest data is analyzed, latest column-store metadata needs to be obtained from the metadata cluster, and column-store data needs to be obtained from the shared storage. However, the Select operation involves a large amount of column-store metadata, leading to a quite high network requirement and a quite high requirement for metadata cluster query performance.

To improve a concurrent analysis capability, ensure that data analysis freshness is 0 and a requirement of a transaction isolation level is met, and lower a network requirement and a requirement for metadata cluster query performance, some cloud vendors provide a multi-virtual-warehouse (virtual warehouse, VW) architecture from a perspective of architecture design.

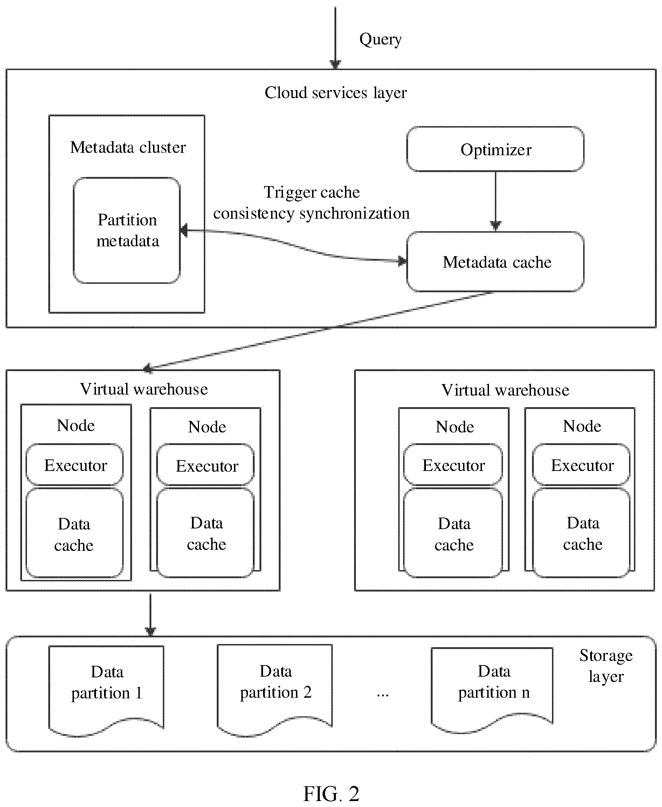

As shown in FIG. 2, the multi-VW architecture includes a cloud services layer, a virtual warehouse layer, and a storage layer. At the storage layer, data may be stored in a data partition. In some examples, data may be stored in the data partition in column-store mode. The VW layer includes a plurality of VWs. Each VW includes at least one node. Each node may include an executor (executor) and a data cache (data cache). A metadata cache (metadata cache) is built at the cloud services layer. The metadata cache stores column-store metadata. When receiving a query statement, an optimizer (optimizer) at the cloud services layer triggers consistency synchronization of metadata, to synchronize metadata from a metadata cluster to the metadata cache, and ensure that all read data is latest modified and committed data. In this way, the optimizer can perform optimization based on the latest modified and committed data and deliver an execution plan, and the VW executes the execution plan through the executor.

However, in this solution, metadata of all partitions that meet a requirement needs to be carried in the delivered execution plan. Consequently, a bandwidth requirement of nodes at the cloud services layer and the VW layer increases, costs are high, and a service requirement can hardly be met. Further, synchronized metadata in the metadata cache is committed consistent metadata. This is equivalent to a read committed (read committed, RC) level among transaction isolation levels, and it is difficult to meet a higher transaction isolation level, for example, a repeatable read (repeatable read, RR) level, a snapshot isolation (snapshot isolation, SI) level, a serializable snapshot isolation (serializable snapshot isolation, SSI) level, or a serializable (Serializable) level.

In view of this, this application provides a data analysis method. The data analysis method may be performed by a data analysis system. The data analysis system may be a software system or a hardware system. When the data analysis system is a software system, for example, a data warehouse software system, the software system may be deployed in a computing device cluster, and the computing device cluster executes program code of the software system, to perform the data analysis method in this application. When the data analysis system is a hardware system, for example, a cloud-native data warehouse, the hardware system may perform the data analysis method in this application during running.

The data analysis system includes a coordinator node (coordinator node, CN), a metadata management apparatus, and a plurality of computing clusters. Each of the plurality of computing clusters includes at least one data node (data node, DN). The computing cluster includes a metadata cache (metadata cache), and the metadata management apparatus records a status of the metadata cache. Similar to the computing cluster, the metadata management apparatus may also be in a cluster form. For example, the metadata management apparatus may be a metadata cluster. In addition, in view of a data control right, analysis costs, and other problems, the computing cluster may be a virtual warehouse VW. The virtual warehouse points to data and does not copy or move any data, but only saves an index to the data.

Specifically, the coordinator node receives a query statement, and delivers a consistency determining request to the metadata management apparatus. In response to the consistency determining request, the metadata management apparatus obtains a consistency determining result of a metadata cache of at least one computing cluster among the plurality of computing clusters based on the status of the metadata cache, and then returns the consistency determining result to the coordinator node. The coordinator node determines a target computing cluster from the plurality of computing clusters based on the consistency determining result. The target computing cluster performs data analysis according to an analysis request delivered by the coordinator node.

In the method, the computing cluster caches metadata, and no metadata needs to be carried in a delivered execution plan, so that a network requirement is lowered. The metadata management apparatus records the status of the metadata cache. When data analysis needs to be performed, consistency of a metadata cache of at least one computing cluster among the plurality of computing clusters may be determined based on the status of the metadata cache. Based on a consistency determining result, an analysis request may be scheduled to an appropriate computing cluster for execution. In this way, a quantity of times of querying whether metadata is latest metadata can be reduced, so that a quantity of times of synchronizing latest metadata from the metadata management apparatus to the metadata cache is reduced, a network requirement is lowered, and a requirement for metadata query performance is lowered. Further, the metadata management apparatus may perform visibility determining based on metadata, to meet requirements of higher transaction isolation levels such as RR, SI, and SSI, without being limited to RC.

To make the technical solutions in this application clearer and easier to understand, the following describes an architecture of a data analysis system in embodiments of this application with reference to the accompanying drawings.

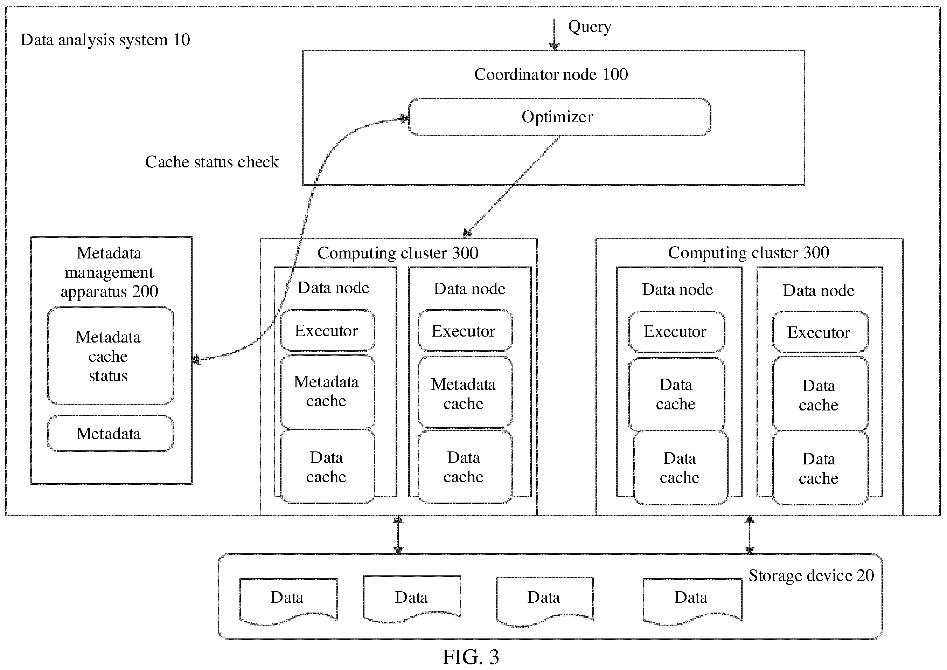

Refer to a diagram of an architecture of a data analysis system in FIG. 3. The data analysis system 10 includes a coordinator node 100, a metadata management apparatus 200, and a plurality of computing clusters 300. The data analysis system 10 may analyze data on a storage device 20, and has high efficiency. The storage device 20 may be a local storage device or a cloud storage device, for example, a simple storage service (Simple Storage Service, S3) device.

Each of the plurality of computing clusters 300 includes at least one data node. The at least one data node may include a data cache (data cache), configured to cache data written to the storage device 20 or read from the storage device 20, to accelerate data analysis. Correspondingly, the computing cluster 300 may further include a metadata cache (metadata cache), to cache corresponding metadata. For example, each data node in the computing cluster 300 may include a metadata cache. In addition, the data node may further include an executor, configured to execute a corresponding execution plan.

The metadata management apparatus 200 is configured to store metadata of the data written to the storage device 20. To facilitate acceleration of data analysis, the metadata management apparatus 200 records a status of the metadata cache. A granularity of the data written to the storage device 20 may be a data block (data block). Correspondingly, a granularity of metadata written to the metadata management apparatus 200 may be a data block or a block group. A block group is a group (group) of a plurality of data blocks, for example, a file or an object formed by combining a plurality of data blocks. Based on this, the metadata may include one or more of block-level metadata (denoted as block metadata) or block group-level metadata (denoted as group metadata). The block group-level metadata may also be referred to as multi-block-level metadata, denoted as multi-block metadata.

The block metadata describes metadata of a data block (for example, a column-store data block). The metadata of the data block includes a data range of the data block, and the data range may also be referred to as min-max index information. Each row of record in the block metadata describes min-max index information of a data block. In addition, the block metadata further includes transaction header (transaction header) information for determining transaction visibility.

For ease of description, the following describes a data structure of the block metadata with reference to an example. Refer to the following table.

Table 1 Data structure of the block metadata

| trx_header | group_id | col_id | block_id | block_max | block_min | ... |
|---|---|---|---|---|---|---|
|  | group0 | c1 | 1001 |  |  |  |
|  | group0 | c2 | 1001 |  |  |  |
|  | group0 | c1 | 1002 |  |  |  |
|  | group0 | c2 | 1002 |  |  |  |
|  | ... | ... | ... |  |  |  |

trx_header indicates a transaction header, group_id is a group identifier (an identifier of a group of a plurality of data blocks), col_id is a column identifier, block_id is a block identifier, block_max is a maximum value in a data block, and block_min is a minimum value in a data block.

The group metadata describes metadata of a group of a plurality of data blocks. The metadata of the group of the plurality of data blocks includes a data range of the group of the plurality of data blocks. In addition, the group metadata further includes transaction header information for determining transaction visibility.

For ease of description, the following describes a data structure of the group metadata with reference to an example. Refer to the following table.

Table 2 Data structure of the group metadata

| trx_header | group_id | col_id | col_min | col_max | ... |
|---|---|---|---|---|---|
|  | group0 | c1 |  |  |  |
|  | group0 | c2 |  |  |  |
|  | ... | ... |  |  |  |

trx_header indicates the transaction header information, group_id is a file identifier, col_id is a column identifier, col_max is a maximum value in a column, and col_min is a minimum value in a column.

The foregoing metadata at different granularities may be stored in a row-store table with transaction header information. The transaction header information (for example, a commit timestamp or a deletion timestamp) may be used for determining transaction visibility, to meet requirements of different transaction isolation levels such as RC, RR, and SSI.

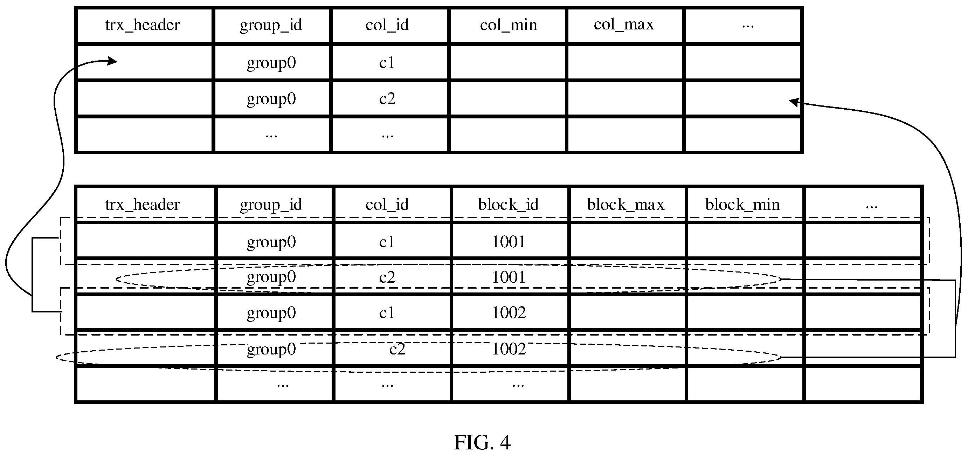

Further, FIG. 4 is a diagram of a relationship between the group metadata and the block metadata. The group metadata describes min-max index information of a group of a plurality of data blocks. As shown in FIG. 4, a row of record, for example, a row of record whose col_id is c1, in the group metadata describes min-max index information of a group of a block 1001 and a block 1002 in a column c1; and another row of record, for example, a row of record whose col_id is c2, in the group metadata describes min-max index information of a group of a block 1001 and a block 1002 in a column c2. min-max index information, described by the group metadata, of a group of a plurality of blocks may be used to implement quick data pruning.

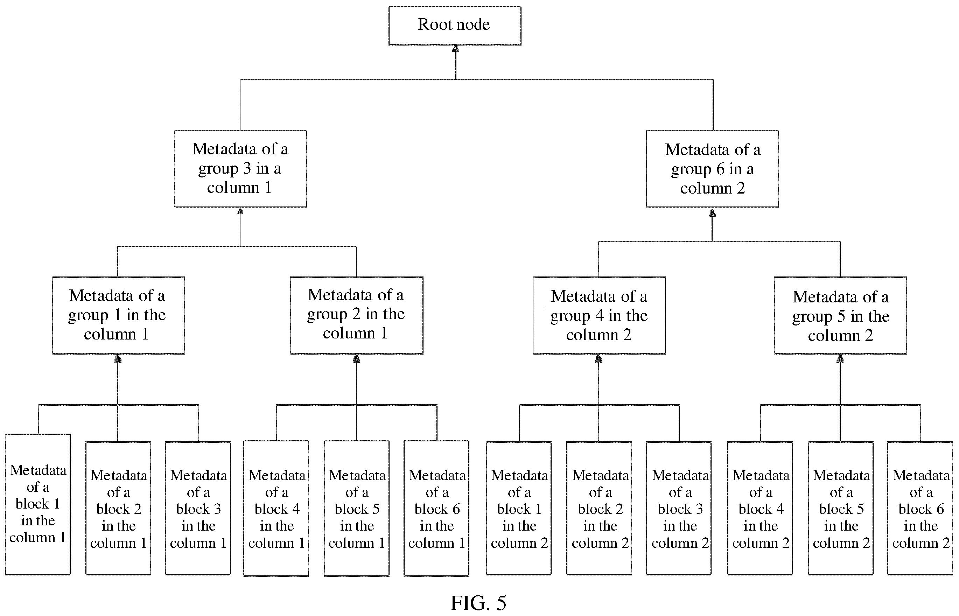

Further, the metadata management apparatus 200 may construct a data structure of metadata by using a hierarchical transaction tree (tree). Refer to a diagram of a structure of a hierarchical transaction tree in FIG. 5. Block metadata (metadata) of a plurality of blocks may correspond to group metadata of one group, and group metadata of a plurality of groups may correspond to group metadata of a new group. For example, block metadata of a block 1, a block 2, a block 3 in a col 1 may correspond to group metadata of a group 1, block metadata of a block 4, a block 5, and a block 6 in the col 1 may correspond to group metadata of a group 2, and the group metadata of the group 1 and the group metadata of the group 2 may correspond to group metadata of a group 3. This can accelerate pruning, and reduce operations per second (operations per second, OPS) for the metadata management apparatus 200.

In some possible implementations, the metadata management apparatus 200 may record, by using cache status data, the status of the metadata cache in the computing cluster. The cache status data may be denoted as Cache Status, and includes version information, a metadata identifier, and a cache location of metadata. The version information may be represented by transaction header information. The metadata identifier includes a column identifier col_id and at least one of a group identifier group_id and a block identifier block_id. The cache location of the metadata is represented by a computing cluster identifier. Further, when the computing cluster includes a plurality of data nodes, the cache location of the metadata is further represented by a data node identifier. The computing cluster identifier may be referred to as a cluster identifier for short and is denoted as cluster_id. The data node identifier may be referred to as a node identifier for short and is denoted as dn_id.

For ease of understanding, the following describes a data structure of the cache status data with reference to an example. Refer to the following table.

Table 3 Data structure of the cache status data

| version | group_id | col_id | cluster_id | dn_id | ... |
|---------|----------|--------|------------|-------|-----|
| 1_3 | group0 | c1 | 1 | 1 | |
| | ... | ... | ... | ... | |

In this example, the cache status data is a non-row-store table that describes the status of the metadata cache. The data structure may be stored in a key value (key value, kv) format, where the key includes version, group_id, and col_id, and the value includes cluster_id and dn_id. Transaction header information in the group metadata may be an implementation of version information of a cache status, and is irrelevant to a transaction. group_id and col_id are used to locate the metadata. cluster_id is used to identify a computing cluster in which the metadata cache is located. dn_id is used to identify a data node on which the metadata cache is located.

Further, the cache status data describes status information of a group metadata cache in the computing cluster, and may be further designed to be status information of a block metadata cache in the computing cluster. Details are shown below.

Table 4 Another data structure of the cache status data

| version | block_id | col_id | cluster_id | dn_id | ... |
|---------|----------|--------|------------|-------|-----|
| | 0001 | 1 | 1 | 1 | |
| | ... | ... | ... | ... | |

Similar to the data structure in Table 3, a key includes version, block _id, and col_id, and a value includes cluster_id and dn_id. Transaction header information in the block metadata may be an implementation of version information (version) of a cache. block_id and col_id are used to locate the metadata. cluster_id is used to identify a computing cluster in which the metadata cache is located. dn_id is used to identify a data node on which the metadata cache is located.

Efficient data analysis can be implemented based on the foregoing data structure. Specifically, the coordinator node 100 is configured to receive a query statement, and deliver a consistency determining request to the metadata management apparatus 200. The metadata management apparatus 200 is configured to: in response to the consistency determining request, obtain a consistency determining result of a metadata cache of at least one computing cluster among the plurality of computing clusters based on the status of the metadata cache, and then return the consistency determining result to the coordinator node 100. The coordinator node 100 is further configured to determine a target computing cluster from the plurality of computing clusters 300 based on the consistency determining result. The target computing cluster is configured to perform data analysis according to an analysis request delivered by the coordinator node 100.

An optimizer (optimizer) is deployed in the coordinator node 100. The optimizer may optimize the query statement, and may send the consistency determining request to the metadata management apparatus 200 after the query statement is optimized. The metadata management apparatus 200 may first perform pruning and visibility determining based on metadata to obtain metadata that needs to be read, and then determine consistency between the metadata and the metadata cache in the computing cluster 300 based on the status of the metadata cache. The optimizer may determine an execution cost based on a metadata cache size of a DN cache in the computing cluster 300, determine, based on the execution cost, a target computing cluster suitable for performing a current task (namely, the query statement), and schedule the task to the target computing cluster for execution, to implement peer-to-peer computing clusters. Further, to implement load balancing, when determining the target computing cluster, the optimizer may determine, based on the execution cost and load information of the computing cluster, the target computing cluster suitable for performing the current task.

The data analysis system 10 is centered on the optimizer to ensure cache consistency of the plurality of computing clusters. This ensures that data freshness is 0 and requirements of different transaction isolation levels are met, and improves a concurrency capability.

To make the technical solutions in this application clearer and easier to understand, the following describes a data analysis method in embodiments of this application with reference to the accompanying drawings.

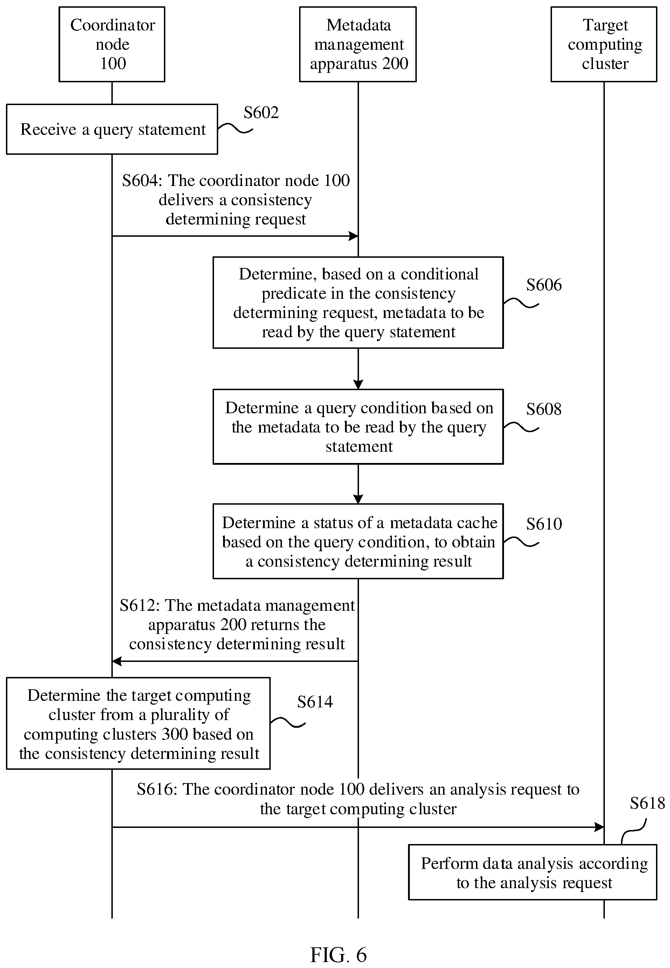

Refer to a flowchart of a data analysis method in FIG. 6. The method includes the following steps.

S602: A coordinator node 100 receives a query statement.

The query statement is a statement for performing an operation on data. Specifically, the query statement may be used to perform data analysis based on data stored in a storage device 20. The query statements may be written by using a structured query language (structured query language, SQL).

The coordinator node 100 may receive a query statement delivered by a client, to trigger a data analysis process for the data stored in the storage device 20, to meet a service requirement. The client may be a data analysis client, for example, an online analytical processing (Online analytical processing, OLAP) client.

S604: The coordinator node 100 delivers a consistency determining request to a metadata management apparatus 200.

Specifically, the query statement may include a data table on which an operation needs to be performed and a predicate (also referred to as a conditional predicate) that represents an operation condition. The coordinator node 100 (for example, an optimizer in the coordinator node 100) may parse the query statement to obtain the conditional predicate. Then the coordinator node 100 may generate the consistency determining request based on the conditional predicate, to request to determine consistency, in a cache and on the metadata management apparatus 200, of metadata to be read by the query statement; and deliver the consistency determining request to the metadata management apparatus 200.

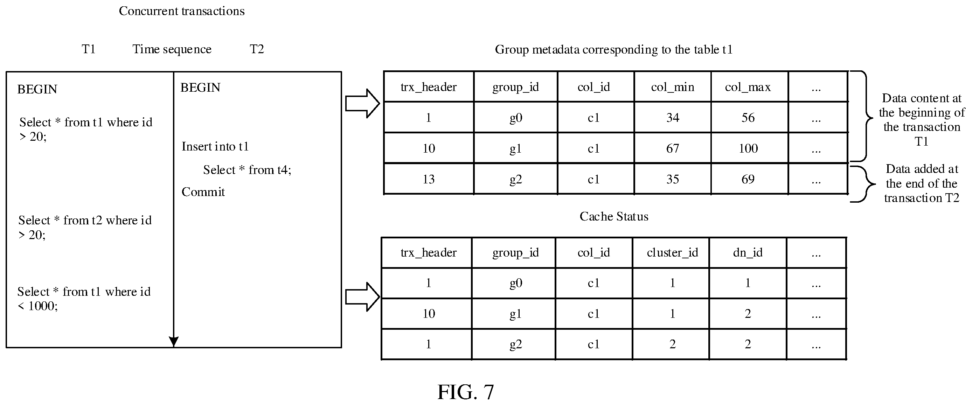

For ease of understanding, descriptions are provided below with reference to an example. Refer to FIG. 7. In this example, the query statement may include Select * from t1 where id > 20, and correspondingly, the conditional predicate may be id > 20. The optimizer in the coordinator node 100 may generate the consistency determining request based on the conditional predicate. It should be noted that the consistency determining request usually further carries a table ID or a table name. Further, when the query statement is a transaction statement, the consistency determining request further carries a time sequence. For example, the consistency determining request may further carry a table name t1 and a time sequence ts1_begin.

S606: The metadata management apparatus 200 determines, based on the conditional predicate in the consistency determining request, the metadata to be read by the query statement.

The metadata management apparatus 200 stores at least one piece of metadata. The metadata may include one or more of block-level metadata (block metadata) or block group-level metadata (group metadata). As shown in Table 1, the block metadata includes a data range of a data block, and the data range is specifically block_min to block_max (the range includes endpoint values). As shown in Table 2, the group metadata includes a data range of a group of a plurality of data blocks. For example, the data range may be col_min to col_max (including endpoint values).

Based on a data range of at least one metadata record stored in the metadata management apparatus 200, the metadata management apparatus 200 may query the at least one piece of metadata based on the conditional predicate in the consistency determining request, to obtain the metadata to be read by the query statement. A data range of at least one data block (a group of a plurality of data blocks or a single data block) in the metadata to be read by the query statement meets a requirement of the conditional predicate.

Further, the metadata management apparatus 200 may further first perform transaction visibility determining based on the metadata stored in the metadata management apparatus 200, to determine metadata of data whose transaction visibility meets a transaction isolation level. Correspondingly, the metadata management apparatus 200 may obtain, based on the conditional predicate from the metadata of the data whose transaction visibility meets the transaction isolation level, the metadata to be read by the query statement.

During specific implementation, the metadata management apparatus 200 obtains the conditional predicate by parsing the consistency determining request, and then queries the group metadata or the block metadata to obtain one or more rows of data that meets/meet the following conditions:

(1) Transaction visibility meets a corresponding transaction isolation level (for example, RC, RR, SI, or SSI).

(2) A min-max range meets the conditional predicate (to be specific, there is an intersection between the min-max range and a value range corresponding to the conditional predicate).

One or more rows of data in the block metadata or the group metadata that meets/meet the requirement of the conditional predicate represent metadata that needs to be read in a subsequent query. The metadata is usually stored in column-store mode, and therefore is also referred to as column-store metadata.

The metadata management apparatus 200 may implement pruning by comparing a data range of a column of data (a group mode of a group of a plurality of data blocks) or a data block with the value range corresponding to the conditional predicate, to avoid reading an entire group (for example, an entire file) or an entire column of data, and reduce read overheads or transmission overheads. The metadata management apparatus 200 performs transaction visibility determining based on the metadata stored in the metadata management apparatus 200, to meet requirements of different transaction isolation levels, without being limited to the RC level.

For ease of understanding, descriptions are provided below still by using FIG. 7 as an example.

It is assumed that the coordinator node 100 receives concurrent transactions T1 and T2, a transaction isolation level is RR or SI, and a read start time sequence of the transaction T1 is denoted as ts1_begin. In this example, it is assumed that the time sequence is 12. The 1st statement of the transaction T1 is "Select * from t1 where id > 20", and a conditional predicate of the statement is id > 20. After obtaining the conditional predicate, the coordinator node 100 generates a consistency determining request and delivers the consistency determining request to the metadata management apparatus 200. The consistency determining request carries a table ID (t1 in this example), a time sequence (ts1_begin in this example), and a conditional predicate (id > 20). The metadata management apparatus 200 determines corresponding group metadata based on the table ID (t1), and then reads corresponding row data based on col_id. During reading of the row data, whether the row data is visible needs to be determined based on the time sequence ts1_begin. Specifically, ts1_begin falling between a commit timestamp and a deletion timestamp indicates that the row data is visible. When ts1_begin = 12, the first two rows may be read. When a row whose transaction visibility meets a requirement of the transaction isolation level is read, whether the row meets a requirement of the conditional predicate may be determined. In this example, both the first two rows can meet the requirement.

Further, the transaction T2 performs data insertion. It is assumed that a commit time sequence is 13, and the 3rd row is generated. At an isolation level of SI or RR, time sequences of all statements in the transaction T1 are ts1_begin = 12. Based on this, data newly inserted by the transaction T2 is still invisible during execution of Select * from t1 where id < 1000.

It should be noted that, at an isolation level of RC, a query statement Select * from t2 where id > 20 takes one time sequence, where in this example, it is assumed that the time sequence is 14; and the query statement Select * from t1 where id < 1000 takes one time sequence, where in this example, it is assumed that the time sequence is 15. In this case, the data newly inserted by the transaction T2 is visible during execution of Select * from t1 where id < 1000.

S608: The metadata management apparatus 200 determines a query condition based on the metadata to be read by the query statement.

A status of a metadata cache is stored in a kv format, and the query condition may be a key of cache status data. The key of the cache status data may include version information and a metadata identifier. As shown in Table 3 or Table 4, the version information is represented by transaction header information. The metadata identifier includes a column identifier col_id and at least one of a block identifier block_id and a group identifier group_id. For example, as shown in Table 3, the metadata identifier includes group_id and col_id. For another example, as shown in Table 4, the metadata identifier may include block_id and col_id. A value may be a cache location. The cache location may be identified by a cluster identifier cluster_id. Further, the cache location may be identified by a data node identifier dn_id, as shown in Table 3 or Table 4.

For each row of data in the metadata to be read by the query statement, the metadata management apparatus 200 may extract version information and identification information, for example, group_id and col_id in the group metadata or col_id and block_id in the block metadata, as a key, to query, from the cache status data, a value corresponding to the key.

FIG. 7 is still used as an example for description. In this example, the metadata management apparatus 200 may extract version, col_id, and group_id from one or more rows of data found in the group metadata, and obtain the following version information and database key: "version_group_id_col_id". In this example, the following two keys may be included:

1_3_g0_c1 and 10_-1_g1_c1, where g0 indicates a group 0, and g1 indicates a group 1.

S610: The metadata management apparatus 200 determines the status of the metadata cache based on the query condition, to obtain a consistency determining result.

The metadata management apparatus 200 records the status of the metadata cache by using the cache status data, for example, Cache Status. The cache status data includes version information, a metadata identifier, and a cache location of metadata. The version information is represented by transaction header information. The metadata identifier includes a column identifier col_id and at least one of a group identifier group_id and a block identifier block_id. When the metadata includes block group-level metadata, the metadata identifier may include group_id and col_id. When the metadata includes block-level metadata, the metadata identifier may include col_id and block_id. The cache location of the metadata is represented by a computing cluster identifier and a data node identifier, for example, represented by cluster_id and dn_id.

Specifically, the metadata management apparatus 200 may first search the Cache Status for a record matching the key, and then determine whether version information in the record is consistent with to-be-found version information (specifically, the version information determined in S608). The version information in the record being consistent with the to-be-found version information indicates that metadata cached in a DN cache of a corresponding computing cluster is consistent with metadata committed to the metadata management apparatus. The version information in the record being inconsistent with the to-be-found version information indicates that latest metadata is cached in none of DN caches of all computing clusters.

FIG. 7 is used as an example for description. Corresponding values can be found for the two keys. 1_3_g0_c1 is in (cluster_id: 1, dn_id: 1) and (cluster_id:2, dn_id:2). To be specific, a column c1 in the group g0 is in a cache of a data node 1 in a cluster 1 and a cache of a data node 2 in a cluster 2. 10_-1_g1_c1 is in (cluster_id: 1, dn_id:2). To be specific, a column c1 in the group g1 is in a cache of a data node 2 in the computing cluster 1.

S612: The metadata management apparatus 200 returns the consistency determining result to the coordinator node 100.

The consistency determining result indicates whether metadata consistent with metadata stored in the metadata management apparatus 200 is cached in a cache of the computing cluster 300. When the consistency determining result indicates that metadata consistent with the metadata stored in the metadata management apparatus 200 is cached in the cache of the computing cluster 300, the consistency determining result further includes a cache location of the metadata, and the cache location may be represented by a cluster identifier (for example, cluster_id) and a node identifier (for example, dn_id).

Specifically, the consistency determining result may include a metadata identifier and a cache location. The metadata identifier may include group_id and col_id. In some examples, the metadata identifier may alternatively be block_id and col_id. The cache location may be represented by cluster_id and dn_id. cluster_id and dn_id being greater than 0 indicates that metadata consistent with the metadata stored in the metadata management apparatus 200 is cached in the cache of the computing cluster 300, and a cache location is a location identified by cluster_id and dn_id. Other cases indicate that latest metadata is cached in none of DN caches of all computing clusters 300.

The metadata management apparatus 200 may return a consistency determining result including the foregoing fields to the coordinator node 100, so that the coordinator node 100 selects, based on the consistency determining result, an appropriate computing cluster 300 for data analysis, to reduce data transmission overheads during data analysis and reduce analysis costs.

S614: The coordinator node 100 determines a target computing cluster from a plurality of computing clusters 300 based on the consistency determining result.

Specifically, the coordinator node 100 may determine, based on the consistency determining result, a cost of performing data analysis by at least one computing cluster 300 among the plurality of computing clusters 300, and then the coordinator node 100 may determine the target computing cluster based on the cost of performing data analysis by the at least one computing cluster 300.

The cost of performing data analysis by the at least one computing cluster 300 includes a base cost (baseCost) of the computing cluster 300 and a cost of reading the metadata cache by the computing cluster 300. Correspondingly, when determining the target computing cluster based on the cost of performing data analysis by the at least one computing cluster 300, the coordinator node 100 may determine, as the target computing cluster, a computing cluster 300 whose data analysis cost is the smallest or is less than a preset value among the at least one computing cluster 300.

S616: The coordinator node 100 delivers an analysis request to the target computing cluster.

The analysis request includes an execution plan and the consistency determining result. The coordinator node 100 may generate the execution plan, generate the analysis request based on the execution plan and the metadata identifier and the cache location that are in the consistency determining result, and then deliver the analysis request to the target computing cluster.

S618: The target computing cluster performs data analysis according to the analysis request.

The target computing cluster may query the metadata cache based on the consistency determining result carried in the analysis request delivered by the coordinator node 100, to obtain the metadata to be read by the query statement; read data based on the metadata to be read by the query statement; and then perform data analysis on the data based on the execution plan.

In some possible implementations, when querying the metadata cache based on the consistency determining result, the target computing cluster may choose to read metadata from different locations based on a hit result in the metadata cache. Specifically, when the metadata to be read by the query statement is hit in the metadata cache, the target computing cluster may obtain, from the metadata cache, the metadata to be read by the query statement; or when the metadata to be read by the query statement is not hit in the metadata cache, the target computing cluster obtains, from the metadata management apparatus 200, the metadata to be read by the query statement.

S606 to S612 are a specific implementation of this embodiment of this application. In this implementation, in response to the consistency determining request, the metadata management apparatus 200 obtains a consistency determining result of a metadata cache of at least one computing cluster 300 among the plurality of computing clusters 300 based on the status of the metadata cache, and then returns the consistency determining result to the coordinator node 100.

Based on the foregoing content descriptions, this embodiment of this application provides a data analysis method. In the method, the computing cluster 300 caches metadata, and no metadata needs to be carried in a delivered execution plan, so that a network requirement is lowered. The metadata management apparatus 200 records the status of the metadata cache. When data analysis needs to be performed, consistency of a metadata cache of at least one computing cluster 300 among the plurality of computing clusters 300 may be determined based on the status of the metadata cache. Based on a consistency determining result, an analysis request may be scheduled to an appropriate computing cluster 300 for execution. In this way, a quantity of times of querying whether metadata is latest metadata can be reduced, so that a quantity of times of synchronizing latest metadata from the metadata management apparatus 200 to the metadata cache is reduced, a network requirement is lowered, and a requirement for metadata query performance is lowered. Further, the metadata management apparatus 200 may perform visibility determining based on metadata, to meet requirements of higher transaction isolation levels such as RR, SI, and SSI.

For ease of understanding, the following describes in detail the data analysis method in this application with reference to specific application scenarios.

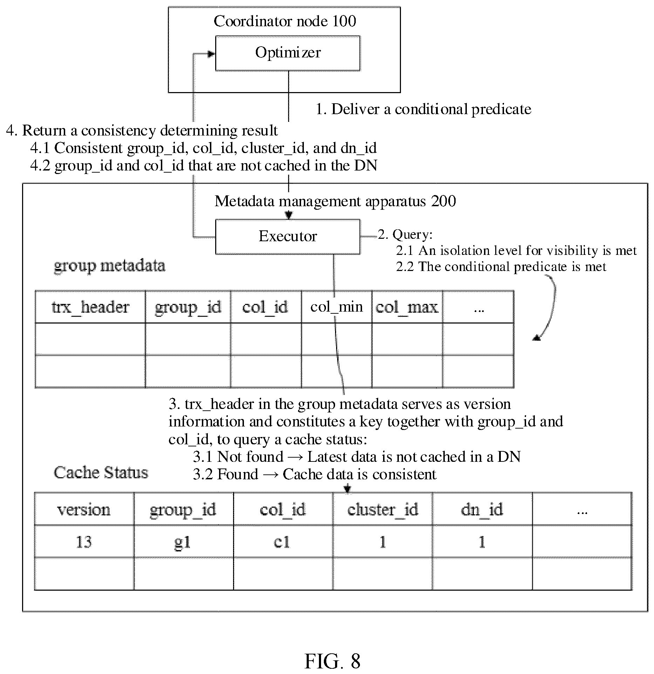

Refer to a diagram of an application scenario of a data analysis method in FIG. 8. In this scenario, the optimizer in the coordinator node 100 receives a query statement, and may deliver a conditional predicate to the metadata management apparatus 200, to perform group metadata-level pruning and group metadata-level cache consistency determining. Specifically, an executor in the metadata management apparatus 200 may parse the conditional predicate and queries group metadata to obtain one or more rows of data that meets/meet a transaction isolation level and the conditional predicate, where the data represents column-store metadata that needs to be read in a subsequent query. After reading the one or more rows of data, the metadata management apparatus 200 may extract corresponding transaction header information as version information, and query Cache Status by using a key including group_id and col_id in the row, to obtain a value corresponding to the key.

No corresponding value being found in Cache Status indicates that latest data is cached in none of DNs of all computing clusters 300. A corresponding value being found in Cache Status indicates that metadata consistent with metadata stored in the metadata management apparatus 200 is cached in a cache of the computing cluster 300. The metadata management apparatus 200 may return group_id, col_id, cluster_id, and dn_id to the coordinator node 100. In the foregoing process, the coordinator node 100 can quickly find computing clusters 300 in which cached column-store metadata caches are consistent with the metadata in the metadata management apparatus 200. In addition, a requirement of a higher transaction isolation level is met based on a group metadata transaction table capability.

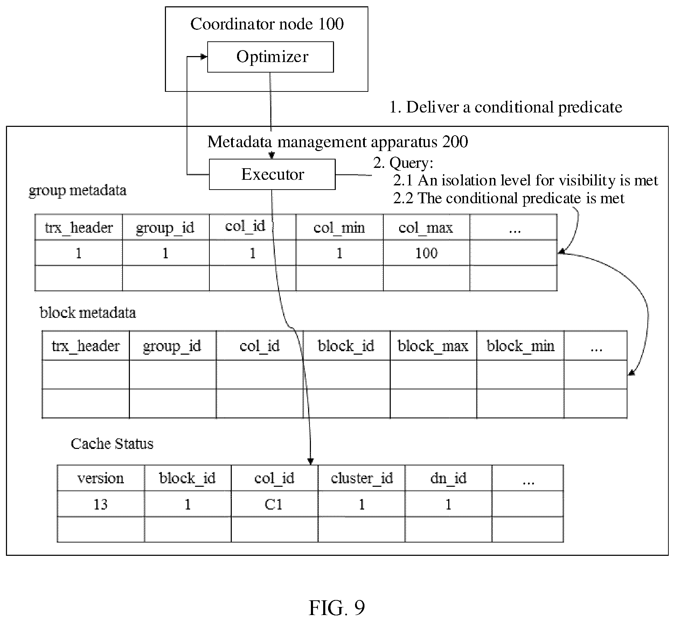

It should be noted that, in FIG. 8, the group metadata-level pruning and the group metadata-level cache consistency determining are used as an example for description. In another possible implementation of this embodiment of this application, block metadata-level pruning and block metadata-level consistency determining may alternatively be performed. Refer to a diagram of an application scenario of a data analysis method in FIG. 9. In this scenario, the coordinator node 100 may receive a query statement, and then deliver a consistency determining request to the metadata management apparatus 200, where the consistency determining request carries a conditional predicate. The metadata management apparatus 200 queries block metadata based on the conditional predicate to obtain one or more rows of data that meets/meet a transaction isolation level and the conditional predicate, and then extracts transaction header information from the data as version information, and queries Cache Status by using the version information and block_id and col_id in the row as a key, to obtain a consistency determining result. Different from that in FIG. 8, the consistency determining result includes block _id, col_id, cluster_id, and dn_id. cluster_id and dn_id being greater than 0 indicates that a value corresponding to the key is found in the block metadata. Other cases indicate that no value corresponding to the key is found in the block metadata.

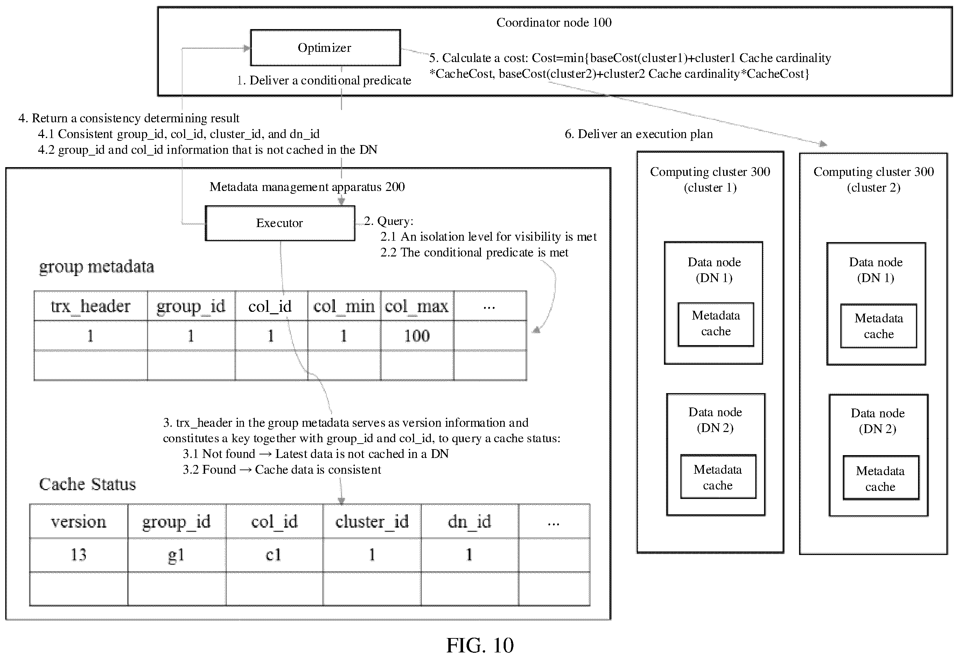

Further, refer to a diagram of determining a target computing cluster in FIG. 10. An optimizer may determine, based on a consistency determining result, for example, consistent group_id, col_id, cluster_id, and group_id, and group_id and col_id that are not cached in a DN, a specific amount of column-store metadata that needs to be read and that is cached in a computing cluster, and then may calculate a corresponding cardinality (Cache cardinality) and a corresponding cost (cluster Cache cardinality*CacheCost) of reading a column-store metadata cache.

For example, a cost of reading column-store metadata by two nodes in a computing cluster cluster1 is cluster1 Cache cardinality*CacheCost, and a cost of reading column-store metadata by two nodes in a computing cluster cluster2 is cluster2 Cache cardinality*CacheCost. The optimizer may calculate a base cost baseCost, and calculate costs of a current query statement in the two computing clusters: baseCost(cluster1)+cluster1 Cache cardinality*CacheCost, and baseCost(cluster2)+cluster2 Cache cardinality*CacheCost. A minimum cost is selected for executing the corresponding query statement:

$$Cost=\min\{baseCost(cluster1)+cluster1\ Cache\ cardinality*CacheCost,$$
$$baseCost(cluster2)+cluster2\ Cache\ cardinality*CacheCost\} \tag{1}$$

Committed column-store metadata is cached in a data node DN of the computing cluster 300, and cache data does not include any transaction information. When reading metadata from the cache, the computing cluster may read, through a column-store metadata read interface, column-store metadata corresponding to a query statement. When the metadata is block group-level metadata, input for the column-store metadata read interface includes version, group_id, and col_id. It should be noted that, when the metadata is block-level metadata, input for the column-store metadata read interface includes version, block id, and col_id.

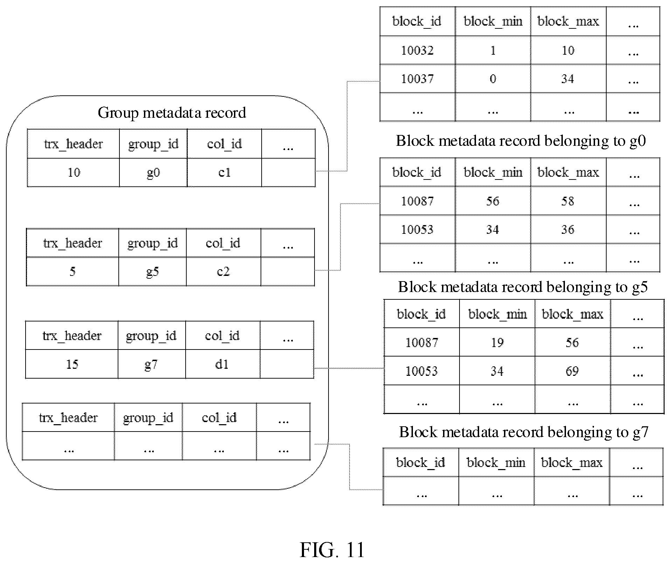

As shown in FIG. 11, when managing a metadata cache, the computing cluster 300 may construct and manage the cache at a multi-layer granularity. A group metadata cache serves as a cache node to cache block metadata information (obtained after a transaction is removed), and a block metadata cache serves as a cache node entry to cache block metadata information obtained after a transaction is removed. The group metadata cache is managed by using a hash (Hash) table and least recently used (Least Recently Used, LRU). The group metadata cache points to the block metadata cache. The block metadata cache stores a group of block metadata.

In some possible implementations, a capacity of the metadata cache is limited, and the computing cluster 300 may further perform cache synchronization and cache eviction. The computing cluster 300 may perform synchronization and eviction by using a cache node or a cache node entry as a granularity. The metadata management apparatus 200 triggers eviction of the metadata cache in the computing cluster 300 based on a cache status.

Specifically, the metadata management apparatus 200 may determine, based on a status of the metadata cache, an expired status record or a status record that is earliest written when the metadata cache exceeds a watermark. Then the metadata management apparatus 200 may delete the expired status record and the status record that is earliest written when the metadata cache exceeds the watermark. Then the metadata management apparatus 200 may send the deleted status record to at least one computing cluster among the plurality of computing clusters 300. The at least one computing cluster 300 evicts corresponding metadata based on the deleted status record.

It should be noted that the metadata management apparatus 200 may further group the status of the metadata cache based on a computing cluster identifier (for example, cluster_id). During grouping, the metadata management apparatus 200 may further perform grouping based on a node identifier (for example, dn_id). Correspondingly, the metadata management apparatus 200 may separately determine, for at least one group, an expired status record or a status record that is earliest written when the metadata cache exceeds the watermark, delete the status record, and send the deleted status record to a corresponding computing cluster 300 to delete corresponding metadata.

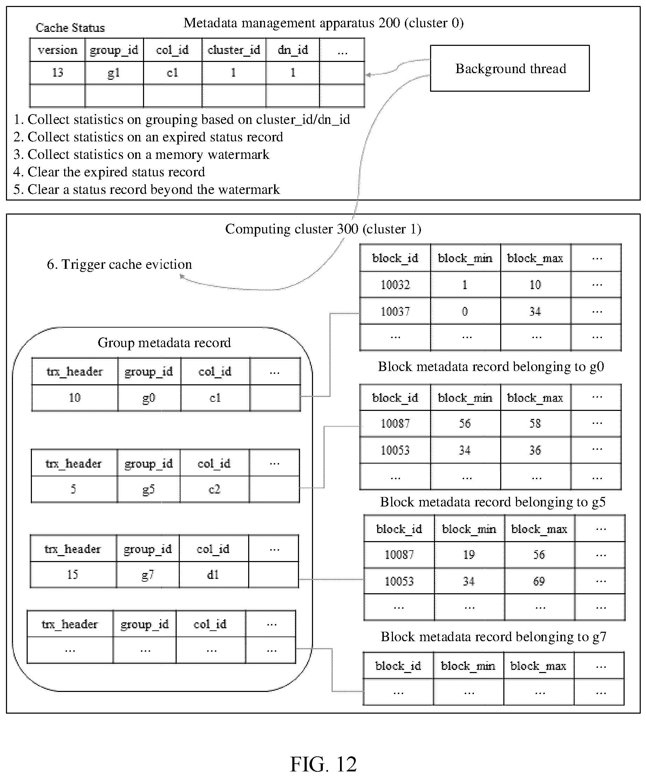

Refer to a schematic flowchart of evicting a metadata cache in FIG. 12. The metadata management apparatus 200 reads Cache Status, performs grouping based on cluster_id/dn_id, extracts version information based on a grouping result, identifies, based on a transaction status, an expired status record, to be specific, a record key: cluster_id_dn_id_group_id_col_id that is never to be read, determines whether a grouping result exceeds a corresponding cache watermark, and if the grouping result exceeds the corresponding cache watermark, identifies a record key: cluster_id_dn_id_group_id_col_id that is earliest written. The metadata management apparatus 200 may delete the foregoing record in Cache Status, and send key: cluster_id_dn_id_group_id_col_id to cluster_id/dn_id to delete a corresponding cache.

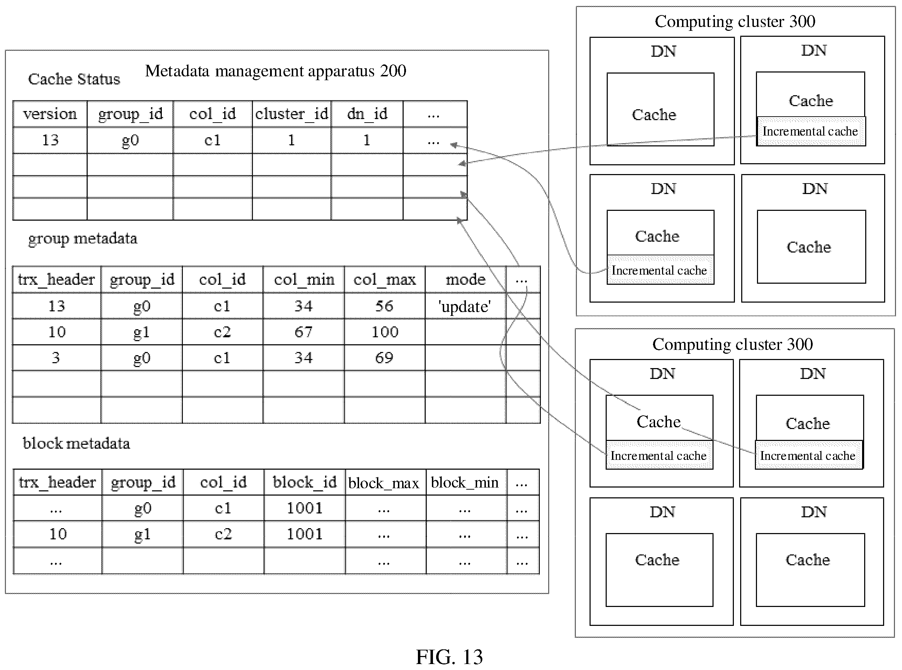

As shown in FIG. 13, a status of a metadata cache may be updated through a background thread of a data node DN in a computing cluster (cluster). The metadata cache usually caches at least one of block metadata or group metadata that has been committed in the metadata management apparatus 200. When an incremental cache exists in a data node DN in a current computing cluster (cluster), the DN identifies incremental cache information through a background thread, and sends the incremental cache information to the metadata management apparatus 200. The metadata management apparatus 200 updates the incremental cache information to Cache Status. A cache interface is idempotent, and a Cache Status interface is idempotent.

The following describes a metadata cache update process.

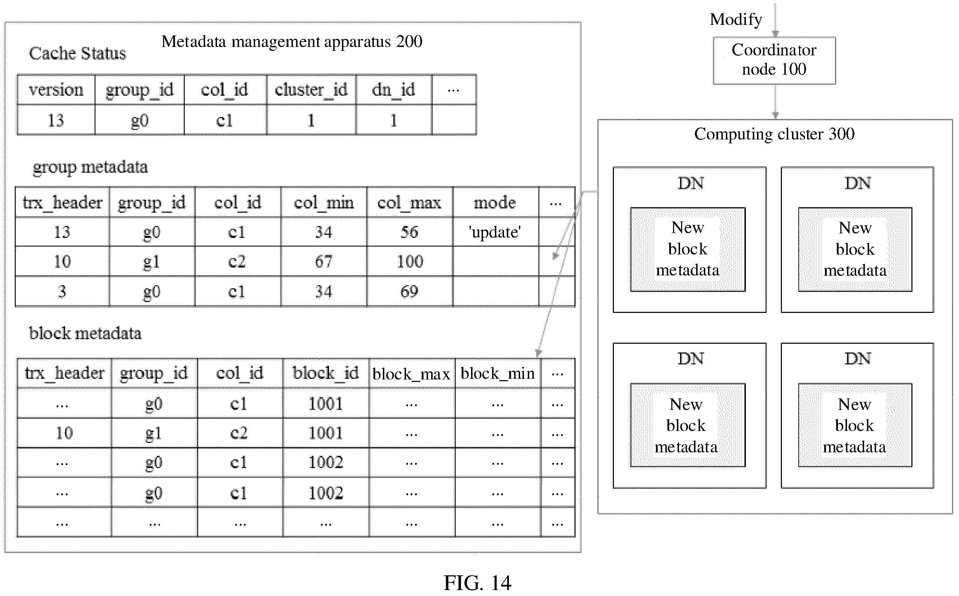

Refer to a diagram of a metadata cache update process in FIG. 14. As shown in FIG. 14, an SQL query type determines a type of an update operation to be triggered for column-store metadata and a column-store metadata cache.

When the query type is select, latest column-store metadata is not cached in a DN of a computing cluster, and synchronization of the column-store metadata cache is triggered. When the query type is update, a modification of the column-store metadata is triggered. When the query type is delete, deletion of the column-store metadata is triggered. When the query type is insert, insertion of the column-store metadata is triggered.

In the update, delete, or insert operation, during transaction committing, it is ensured that an operation on block metadata or group metadata is atomically committed along with the transaction. Group metadata or block metadata generated by update, delete, or insert in the DN is committed along with a transaction, and is inserted into a group metadata cache or a block metadata cache after transaction information is removed. An incremental group metadata cache or block metadata cache is updated into Cache Status in the background, or is inserted into Cache Status along with transaction committing after transaction information is removed.

To make the technical solutions in this application clearer, the following describes the data analysis method in embodiments of this application with reference to an interaction flowchart.

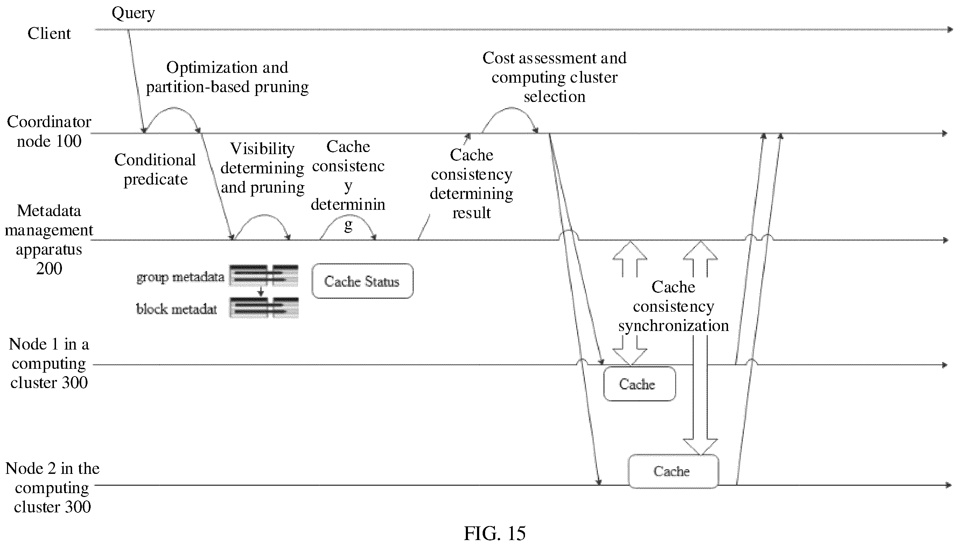

Refer to an interaction flowchart of a data analysis method in FIG. 15. The method specifically includes the following steps.

(1) A client (client) sends a query statement to a coordinator node 100.
(2) An optimizer in the coordinator node 100 delivers a conditional predicate of the query statement to a metadata management apparatus 200, to perform group metadata-level pruning and group metadata-level cache consistency determining.
(3) The metadata management apparatus 200 queries group metadata based on the conditional predicate, to obtain one or more rows of data that meets/meet a transaction isolation level and the conditional predicate.
(4) The metadata management apparatus 200 extracts corresponding transaction header information from the one or more rows of data as version information, and queries data in Cache Status by using a key including group_id and col_id in the row, to perform consistency determining. No value corresponding to the key being found indicates that latest data is cached in none of DNs in all computing clusters. A value corresponding to the key being found indicates that metadata cached in a data node DN in a corresponding computing cluster is consistent with metadata in the metadata management apparatus 200.
(5) The metadata management apparatus 200 returns a consistency determining result to the coordinator node 100.
(6) The optimizer in the coordinator node 100 calculates a minimum cost: Cost=min{baseCost(cluster1)+cluster1 Cache cardinality*CacheCost, baseCost(cluster2)+cluster2 Cache cardinality*CacheCost}; and selects a computing cluster 300 (a target computing cluster) with the minimum cost for data analysis.
(7) The coordinator node 100 delivers an execution plan and the consistency determining result to the target computing cluster for execution.
(8) When it is determined, based on group_id, col_id, cluster_id, and dn_id in the consistency determining result, that to-be-read metadata exists in a metadata cache, the metadata is extracted from the metadata cache; otherwise, the metadata is extracted from the metadata management apparatus 200 and inserted into the metadata cache. The target computing cluster reads data based on the metadata, and performs data analysis based on the execution plan.

Based on the data analysis method in the foregoing embodiments, this application further provides a data analysis system. As shown in FIG. 3, the data analysis system 10 includes a coordinator node 100, a metadata management apparatus 200, and a plurality of computing clusters 300. The computing cluster 300 includes a metadata cache. The metadata management apparatus 200 records a status of the metadata cache.

The coordinator node 100 is configured to receive a query statement, and deliver a consistency determining request to the metadata management apparatus.

The metadata management apparatus 200 is configured to: in response to the consistency determining request, obtain a consistency determining result of a metadata cache of at least one computing cluster 300 among the plurality of computing clusters 300 based on the status of the metadata cache, and then return the consistency determining result to the coordinator node 100.

The coordinator node 100 is further configured to determine a target computing cluster from the plurality of computing clusters based on the consistency determining result.

The target computing cluster is configured to perform data analysis according to an analysis request delivered by the coordinator node 100.

For example, the coordinator node 100, the metadata management apparatus 200, and the computing cluster 300 may be implemented by using hardware or software. For example, the coordinator node 100 may be a logical node, for example, coordination software; or the coordinator node 100 may be a physical node, for example, a computing device on which coordination software is deployed. The metadata management apparatus 200 may be a software apparatus or a hardware apparatus with a metadata management function. The computing cluster 300 may be cluster software used for data processing, or a computing device cluster in which the cluster software is deployed.

For ease of description, the metadata management apparatus 200 is used below as an example for description.

When being implemented by using software, the metadata management apparatus 200 may be an application, for example, a computing engine, that is run on a computing device. The application may be provided as a virtualization service for a user to use. The virtualization service may include a virtual machine (virtual machine, VM) service, a bare metal server (bare metal server, BMS) service, and a container (container) service. The VM service may be a service of virtualizing a virtual machine (virtual machine, VM) resource pool on a plurality of physical hosts (for example, computing devices) by using a virtualization technology, to provide a VM on demand for the user to use. The BMS service is a service of virtualizing a BMS resource pool on a plurality of physical hosts to provide a BMS on demand for the user to use. The container service is a service of virtualizing a container resource pool on a plurality of physical hosts to provide a container on demand for the user to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, processes, and resources. It should be understood that the VM service, the BMS service, and the container service in the virtualization service are merely specific examples. During actual application, the virtualization service may alternatively be another lightweight or heavyweight virtualization service. This is not specifically limited herein.

When being implemented by using hardware, the metadata management apparatus 200 may include at least one computing device, for example, a server. Alternatively, the metadata management apparatus 200 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field-programmable gate array (field-programmable gate array, FPGA), a generic array logic (generic array logic, GAL), or any combination thereof.

In some possible implementations, the consistency determining request includes a conditional predicate of the query statement; and

the metadata management apparatus 200 is specifically configured to:

determine, based on the conditional predicate, metadata to be read by the query statement;
determine a query condition based on the metadata to be read by the query statement; and
determine the status of the metadata cache based on the query condition, to obtain the consistency determining result.

In some possible implementations, the metadata management apparatus 200 stores at least one piece of metadata, each piece of metadata records a data range of at least one data block, and the metadata management apparatus 200 is specifically configured to:

query, based on the conditional predicate, the metadata stored in the metadata management apparatus, and determine the metadata to be read by the query statement, where a data range of at least one data block in the metadata to be read by the query statement meets a requirement of the conditional predicate.

In some possible implementations, the metadata management apparatus 200 is specifically configured to:

perform transaction visibility determining based on the metadata stored in the metadata management apparatus 200, to determine metadata of data whose transaction visibility meets a transaction isolation level; and
obtain, based on the conditional predicate from the metadata of the data whose transaction visibility meets the transaction isolation level, the metadata to be read by the query statement.

In some possible implementations, the metadata management apparatus 200 stores one or more of block-level metadata or block group-level metadata.

In some possible implementations, the metadata management apparatus 200 records the status of the metadata cache by using cache status data, the cache status data includes transaction header information, a metadata identifier, and a cache location of metadata, the metadata identifier includes a column identifier and at least one of a block identifier and a group identifier, and the cache location of the metadata is represented by a computing cluster identifier.

In some possible implementations, the coordinator node 100 is specifically configured to:

determine, based on the consistency determining result, a cost of performing data analysis by at least one computing cluster 300 among the plurality of computing clusters 300; and
determine the target computing cluster based on the cost of performing data analysis by the at least one computing cluster 300.

In some possible implementations, the cost of performing data analysis by the at least one computing cluster 300 includes a base cost of the computing cluster 300 and a cost of reading the metadata cache by the computing cluster 300; and
the coordinator node 100 is specifically configured to:
determine, as the target computing cluster, a computing cluster 300 whose data analysis cost is the smallest or is less than a preset value among the at least one computing cluster 300.

In some possible implementations, the analysis request includes an execution plan and the consistency determining result; and
the target computing cluster is specifically configured to:

query the metadata cache based on the consistency determining result, to obtain the metadata to be read by the query statement; and
read data based on the metadata to be read by the query statement, and perform data analysis on the data based on the execution plan.

In some possible implementations, the target computing cluster is specifically configured to:

when the metadata to be read by the query statement is hit in the metadata cache, obtain, from the metadata cache, the metadata to be read by the query statement; or
when the metadata to be read by the query statement is not hit in the metadata cache, obtain, from the metadata management apparatus, the metadata to be read by the query statement.

In some possible implementations, the metadata management apparatus 200 is further configured to:

determine, based on the status of the metadata cache, an expired status record or a status record that is earliest written when the metadata cache exceeds a watermark;
delete the expired status record and the status record that is earliest written when the metadata cache exceeds the watermark; and
send the deleted status record to at least one computing cluster among the plurality of computing clusters 300; and
the at least one computing cluster 300 is further configured to:
evict corresponding metadata based on the deleted status record.

In some possible implementations, the metadata management apparatus 200 is further configured to:

group the status of the metadata cache based on the computing cluster identifier; and
the metadata management apparatus 200 is specifically configured to:
separately determine, for at least one group, an expired status record or a status record that is earliest written when the metadata cache exceeds the watermark.

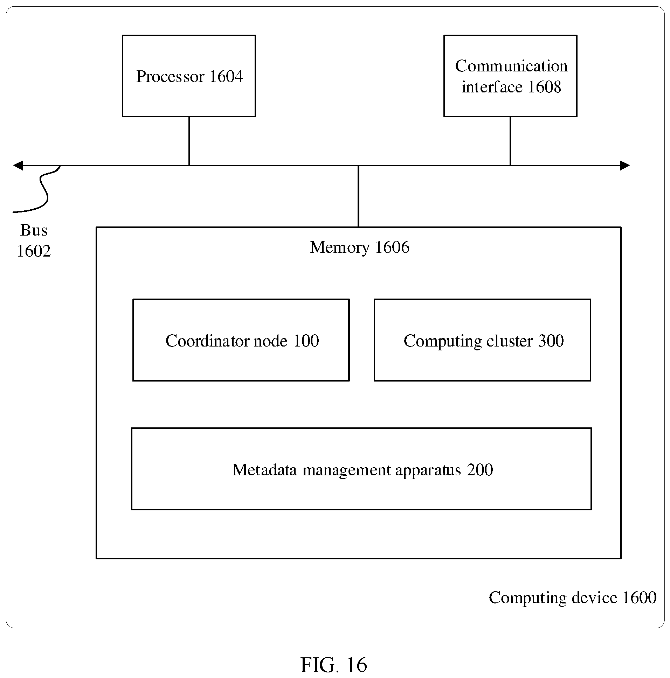

In some possible implementations, the metadata management apparatus 200 is further configured to:
when the at least one computing cluster caches incremental metadata, update the status of the metadata cache based on cache information of the incremental metadata.
In some possible implementations, the computing cluster 300 includes a virtual warehouse.
This application further provides a computing device 1600. As shown in FIG. 16, the computing device 1600 includes a bus 1602, a processor 1604, a memory 1606, and a communication interface 1608. The processor 1604, the memory 1606, and the communication interface 1608 communicate with each other through the bus 1602. The computing device 1600 may be a server or a terminal device. It should be understood that quantities of processors and memories in the computing device 1600 are not limited in this application.
The bus 1602 may be a peripheral component interconnect (peripheral component interconnect, PCI) bus, an extended industry standard architecture (extended industry standard architecture, EISA) bus, or the like. The bus may be categorized as an address bus, a data bus, a control bus, or the like. For ease of representation, only one line is used to represent the bus in FIG. 16, but this does not mean that there is only one bus or only one type of bus. The bus 1602 may include a path for transmitting information between the components (for example, the memory 1606, the processor 1604, and the communication interface 1608) of the computing device 1600.

The processor 1604 may include any one or more of a central processing unit (central processing unit, CPU), a graphics processing unit (graphics processing unit, GPU), a microprocessor (microprocessor, MP), a digital signal processor (digital signal processor, DSP), or other processors.

The memory 1606 may include a volatile memory (volatile memory), for example, a random access memory (random access memory, RAM). Alternatively, the memory 1606 may include a non-volatile memory (non-volatile memory), for example, a read-only memory (read-only memory, ROM), a flash memory, a hard disk drive (hard disk drive, HDD), or a solid-state drive (solid-state drive, SSD). The memory 1606 stores executable program code, and the processor 1604 executes the executable program code to implement the foregoing data analysis method. Specifically, the memory 1606 stores instructions used for the data analysis system 10 to perform the data analysis method.

The communication interface 1608 uses a transceiver module, for example, but not limited to, a network interface card or a transceiver, to implement communication between the computing device 1600 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

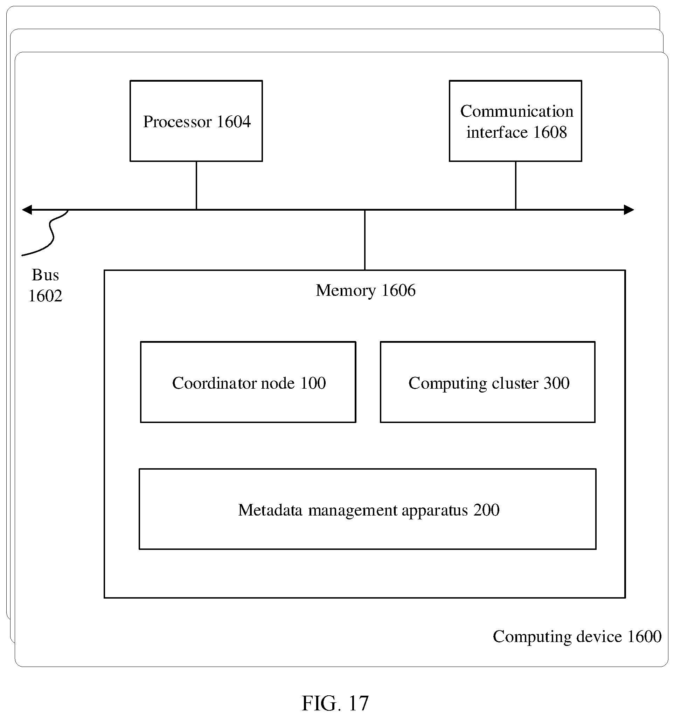

As shown in FIG. 17, the computing device cluster includes at least one computing device 1600. A memory or memories 1606 in one or more computing devices 1600 in the computing device cluster may store same instructions used for the data analysis system 10 to perform the data analysis method.

In some possible implementations, the one or more computing devices 1600 in the computing device cluster may alternatively be configured to execute some of instructions used for the data analysis system 10 to perform the data analysis method. In other words, a combination of the one or more computing devices 1600 may jointly execute the instructions used for the data analysis system 10 to perform the data analysis method.

It should be noted that memories 1606 in different computing devices 1600 in the computing device cluster may store different instructions for performing some of functions of the data analysis system 10.

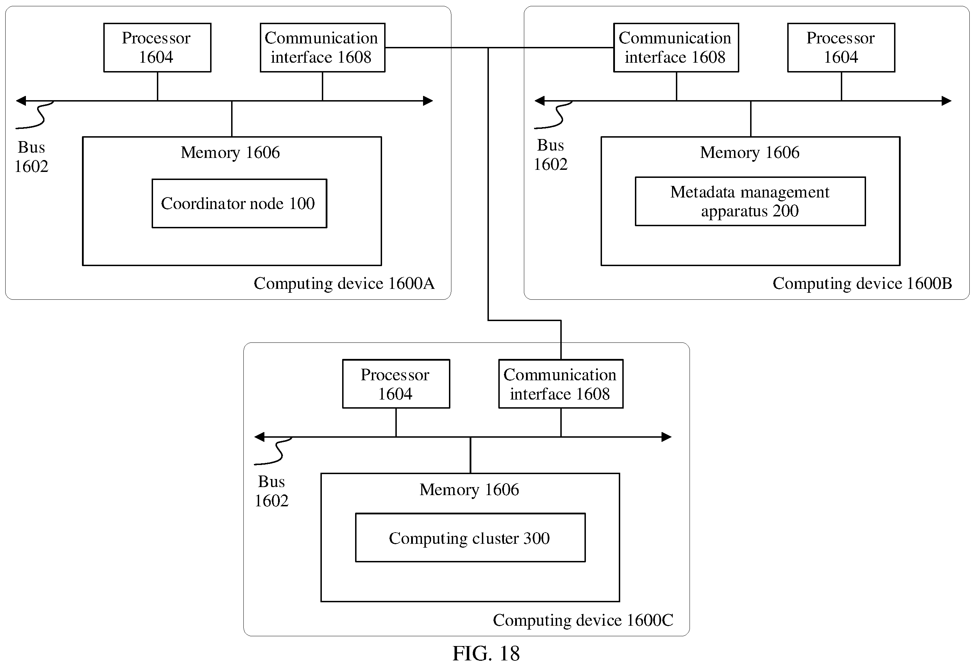

FIG. 18 shows a possible implementation. As shown in FIG. 18, three computing devices 1600A, 1600B, and 1600C are connected through a communication interface 1608. A memory in the computing device 1600A stores instructions for performing the functions of the coordinator node 100. A memory in the computing device 1600B stores instructions for performing the functions of the metadata management apparatus 200. A memory in the computing device 1600C stores instructions for performing the functions of the computing cluster 300. In other words, the memories 1606 in the computing devices 1600A, 1600B, and 1600C jointly store instructions used for the data analysis system 10 to perform the data analysis method.

In the connection manner of the computing device cluster shown in FIG. 18, because a large amount of computing power is needed for data processing in the data analysis method provided in this application, the functions implemented by the coordinator node 100, the metadata management apparatus 200, and the computing cluster 300 may be allocated to different computing devices for execution.

It should be understood that functions of the computing device 1600A shown in FIG. 18 may alternatively be performed by a plurality of computing devices 1600. Similarly, functions of the computing device 1600B may alternatively be performed by a plurality of computing devices 1600, and functions of the computing device 1600C may alternatively be performed by a plurality of computing devices 1600.

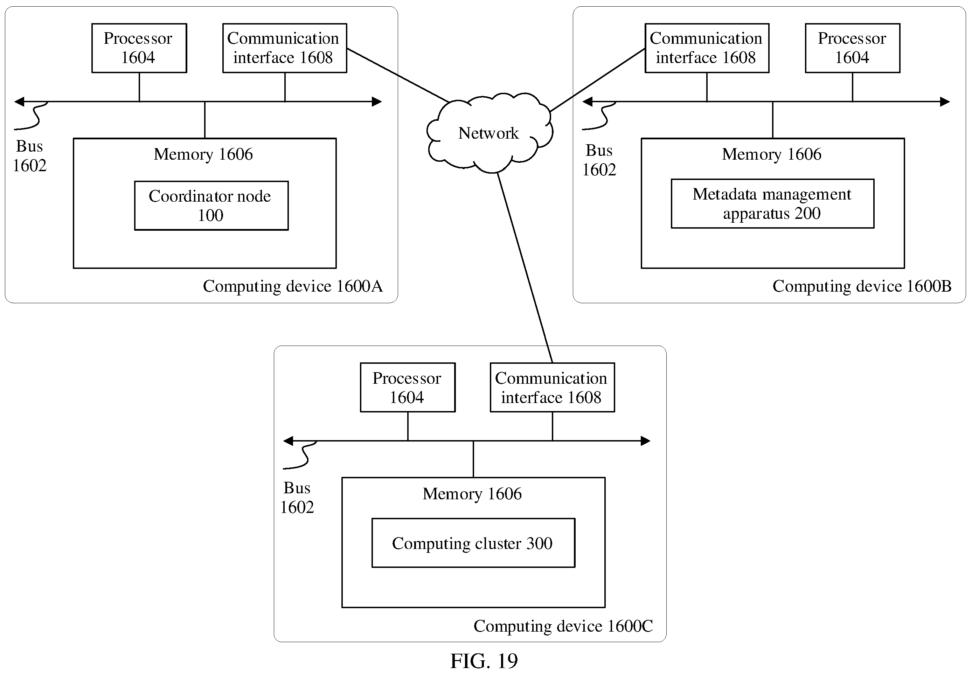

In some possible implementations, the one or more computing devices in the computing device cluster may be connected through a network. The network may be a wide area network, a local area network, or the like. FIG. 19 shows a possible implementation. As shown in FIG. 19, three computing devices 1600D, 1600E, and 1600F are connected through a network. Specifically, the computing devices are connected to the network through communication interfaces in the computing devices. In this possible implementation, a memory 1606 in the computing device 1600D stores instructions for performing the functions of the coordinator node 100. In addition, a memory 1606 in the computing device 1600E stores instructions for performing the functions of the metadata management apparatus 200, and a memory 1606 in the computing device 1600F stores instructions for performing the functions of the computing cluster 300.

In the connection manner of the computing device cluster shown in FIG. 19, because a large amount of computing power is needed for data processing in the data analysis method provided in this application, the functions implemented by the coordinator node 100, the metadata management apparatus 200, and the computing cluster 300 may be allocated to different computing devices 1600 for execution.

It should be understood that functions of the computing device 1600D shown in FIG. 19 may alternatively be performed by a plurality of computing devices 1600. Similarly, functions of the computing device 1600E may alternatively be performed by a plurality of computing devices 1600, and functions of the computing device 1600F may alternatively be performed by a plurality of computing devices 1600.

An embodiment of this application further provides a computer-readable storage medium. The computer-readable storage medium may be any usable medium that can be stored on a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the data analysis method applied to the data analysis system 10.

An embodiment of this application further provides a computer program product including instructions. The computer program product may be software or a program product that includes the instructions and that can be run on a computing device or stored in any usable medium. When the computer program product is run on at least one computing device, the at least one computing device is enabled to perform the foregoing data analysis method.

Finally, it should be noted that the foregoing embodiments are merely intended to describe the technical solutions of the present invention, but not to limit the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A data analysis method, applied to a data analysis system, wherein the data analysis system comprises a coordinator node, a metadata management apparatus, and a plurality of computing clusters, the computing cluster comprises a metadata cache, the metadata management apparatus records a status of the metadata cache, and the method comprises:

    receiving, by the coordinator node, a query statement, and delivering a consistency determining request to the metadata management apparatus;
    in response to the consistency determining request, obtaining, by the metadata management apparatus, a consistency determining result of a metadata cache of at least one computing cluster among the plurality of computing clusters based on the status of the metadata cache, and then returning the consistency determining result to the coordinator node;
    determining, by the coordinator node, a target computing cluster from the plurality of computing clusters based on the consistency determining result; and
    performing, by the target computing cluster, data analysis according to an analysis request delivered by the coordinator node.

2. The method according to claim 1, wherein the consistency determining request comprises a conditional predicate of the query statement; and
    obtaining, by the metadata management apparatus, the consistency determining result of the metadata cache of the at least one computing cluster among the plurality of computing clusters based on the status of the metadata cache comprises:

    determining, by the metadata management apparatus based on the conditional predicate, metadata to be read by the query statement;
    determining, by the metadata management apparatus, a query condition based on the metadata to be read by the query statement; and
    determining, by the metadata management apparatus, the status of the metadata cache based on the query condition, to obtain the consistency determining result.

3. The method according to claim 2, wherein the metadata management apparatus stores at least one piece of metadata, each piece of metadata records a data range of at least one data block, and determining, by the metadata management apparatus based on the conditional predicate, the metadata to be read by the query statement comprises:
    querying, by the metadata management apparatus based on the conditional predicate, the metadata stored in the metadata management apparatus, and determining the metadata to be read by the query statement, wherein a data range of at least one data block in the metadata to be read by the query statement meets a requirement of the conditional predicate.

4. The method according to claim 3, wherein querying, by the metadata management apparatus based on the conditional predicate, the metadata stored in the metadata management apparatus, and determining the metadata to be read by the query statement comprises:

performing, by the metadata management apparatus, transaction visibility determining based on the metadata stored in the metadata management apparatus, to determine metadata of data whose transaction visibility meets a transaction isolation level; and
obtaining, by the metadata management apparatus based on the conditional predicate from the metadata of the data whose transaction visibility meets the transaction isolation level, the metadata to be read by the query statement.

5. The method according to any one of claims 1 to 4, wherein the metadata management apparatus stores one or more of block-level metadata or block group-level metadata.

6. The method according to any one of claims 1 to 5, wherein the metadata management apparatus records the status of the metadata cache by using cache status data, wherein the cache status data comprises transaction header information, a metadata identifier, and a cache location of metadata, the metadata identifier comprises a column identifier and at least one of a block identifier and a group identifier, and the cache location of the metadata is represented by a computing cluster identifier.

7. The method according to any one of claims 1 to 6, wherein determining, by the coordinator node, the target computing cluster from the plurality of computing clusters based on the consistency determining result comprises:

determining, by the coordinator node based on the consistency determining result, a cost of performing data analysis by at least one computing cluster among the plurality of computing clusters; and
determining, by the coordinator node, the target computing cluster based on the cost of performing data analysis by the at least one computing cluster.

8. The method according to claim 7, wherein the cost of performing data analysis by the at least one computing cluster comprises a base cost of the computing cluster and a cost of reading the metadata cache by the computing cluster; and
determining, by the coordinator node, the target computing cluster based on the cost of performing data analysis by the at least one computing cluster comprises:
determining, by the coordinator node as the target computing cluster, a computing cluster whose data analysis cost is the smallest or is less than a preset value among the at least one computing cluster.

9. The method according to any one of claims 1 to 8, wherein the analysis request comprises an execution plan and the consistency determining result; and
performing, by the target computing cluster, data analysis according to the analysis request delivered by the coordinator node comprises:

querying, by the target computing cluster, the metadata cache based on the consistency determining result, to obtain the metadata to be read by the query statement; and
reading, by the target computing cluster, data based on the metadata to be read by the query statement, and performing data analysis on the data based on the execution plan.

10. The method according to claim 9, wherein querying, by the target computing cluster, the metadata cache based on the consistency determining result, to obtain the metadata to be read by the query statement comprises:

when the metadata to be read by the query statement is hit in the metadata cache, obtaining, from the metadata cache, the metadata to be read by the query statement; or
when the metadata to be read by the query statement is not hit in the metadata cache, obtaining, from the metadata management apparatus, the metadata to be read by the query statement.

11. The method according to any one of claims 1 to 10, wherein the method further comprises:

determining, by the metadata management apparatus based on the status of the metadata cache, an expired status record or a status record that is earliest written when the metadata cache exceeds a watermark;
deleting, by the metadata management apparatus, the expired status record and the status record that is earliest written when the metadata cache exceeds the watermark;

sending, by the metadata management apparatus, the deleted status record to at least one computing cluster among the plurality of computing clusters; and

evicting, by the at least one computing cluster, corresponding metadata based on the deleted status record.

12. The method according to claim 11, wherein the method further comprises:

grouping, by the metadata management apparatus, the status of the metadata cache based on the computing cluster identifier; and

determining, by the metadata management apparatus from the status of the metadata cache, the expired status record or the status record that is earliest written when the metadata cache exceeds the watermark comprises: separately determining, by the metadata management apparatus for at least one group, an expired status record or a status record that is earliest written when the metadata cache exceeds the watermark.

13. The method according to any one of claims 1 to 12, wherein the method further comprises: when the at least one computing cluster caches incremental metadata, updating, by the metadata management apparatus, the status of the metadata cache based on cache information of the incremental metadata.

14. A data analysis system, wherein the data analysis system comprises a coordinator node, a metadata management apparatus, and a plurality of computing clusters, the computing cluster comprises a metadata cache, and the metadata management apparatus records a status of the metadata cache;

the coordinator node is configured to receive a query statement, and deliver a consistency determining request to the metadata management apparatus;

the metadata management apparatus is configured to: in response to the consistency determining request, obtain a consistency determining result of a metadata cache of at least one computing cluster among the plurality of computing clusters based on the status of the metadata cache, and then return the consistency determining result to the coordinator node;

the coordinator node is further configured to determine a target computing cluster from the plurality of computing clusters based on the consistency determining result; and

the target computing cluster is configured to perform data analysis according to an analysis request delivered by the coordinator node.

15. The system according to claim 14, wherein the consistency determining request comprises a conditional predicate of the query statement; and
the metadata management apparatus is specifically configured to:

determine, based on the conditional predicate, metadata to be read by the query statement;

determine a query condition based on the metadata to be read by the query statement; and

determine the status of the metadata cache based on the query condition, to obtain the consistency determining result.

16. The system according to claim 15, wherein the metadata management apparatus stores at least one piece of metadata, each piece of metadata records a data range of at least one data block, and the metadata management apparatus is specifically configured to:
query, based on the conditional predicate, the metadata stored in the metadata management apparatus, and determine the metadata to be read by the query statement, wherein a data range of at least one data block in the metadata to be read by the query statement meets a requirement of the conditional predicate.

17. The system according to claim 16, wherein the metadata management apparatus is specifically configured to:

perform transaction visibility determining based on the metadata stored in the metadata management apparatus, to determine metadata of data whose transaction visibility meets a transaction isolation level; and

obtain, based on the conditional predicate from the metadata of the data whose transaction visibility meets the transaction isolation level, the metadata to be read by the query statement.

18. The system according to any one of claims 14 to 17, wherein the metadata management apparatus stores one or more of block-level metadata or block group-level metadata.

19. The system according to any one of claims 14 to 18, wherein the metadata management apparatus records the status of the metadata cache by using cache status data, wherein the cache status data comprises transaction header information, a metadata identifier, and a cache location of metadata, the metadata identifier comprises a column identifier and at least one of a block identifier and a group identifier, and the cache location of the metadata is represented by a computing cluster identifier.

20. The system according to any one of claims 14 to 19, wherein the coordinator node is specifically configured to:

determine, based on the consistency determining result, a cost of performing data analysis by at least one computing cluster among the plurality of computing clusters; and
determine the target computing cluster based on the cost of performing data analysis by the at least one computing cluster.

21. The system according to any one of claims 14 to 20, wherein the cost of performing data analysis by the at least one computing cluster comprises a base cost of the computing cluster and a cost of reading the metadata cache by the computing cluster; and
the coordinator node is specifically configured to:
determine, as the target computing cluster, a computing cluster whose data analysis cost is the smallest or is less than a preset value among the at least one computing cluster.

22. The system according to any one of claims 14 to 21, wherein the analysis request comprises an execution plan and the consistency determining result; and
the target computing cluster is specifically configured to:

query the metadata cache based on the consistency determining result, to obtain the metadata to be read by the query statement; and
read data based on the metadata to be read by the query statement, and perform data analysis on the data based on the execution plan.

23. The system according to claim 22, wherein the target computing cluster is specifically configured to:

when the metadata to be read by the query statement is hit in the metadata cache, obtain, from the metadata cache, the metadata to be read by the query statement; or
when the metadata to be read by the query statement is not hit in the metadata cache, obtain, from the metadata management apparatus, the metadata to be read by the query statement.

24. The system according to any one of claims 14 to 23, wherein the metadata management apparatus is further configured to:

determine, based on the status of the metadata cache, an expired status record or a status record that is earliest written when the metadata cache exceeds a watermark;
delete the expired status record and the status record that is earliest written when the metadata cache exceeds the watermark; and
send the deleted status record to at least one computing cluster among the plurality of computing clusters; and
the at least one computing cluster is further configured to:
evict corresponding metadata based on the deleted status record.

25. The system according to claim 24, wherein the metadata management apparatus is further configured to:

group the status of the metadata cache based on the computing cluster identifier; and
the metadata management apparatus is specifically configured to:
separately determine, for at least one group, an expired status record or a status record that is earliest written when the metadata cache exceeds the watermark.

26. The system according to any one of claims 14 to 25, wherein the metadata management apparatus is further configured to:
when the at least one computing cluster caches incremental metadata, update the status of the metadata cache based on cache information of the incremental metadata.

27. A computing device cluster, wherein the computing device cluster comprises at least one computing device, the at least one computing device comprises at least one processor and at least one memory, the at least one memory stores computer-readable instructions, and the at least one processor executes the computer-readable instructions, to enable the computing device cluster to perform the method according to any one of claims 1 to 13.

28. A computer-readable storage medium, comprising computer-readable instructions, wherein the computer-readable instructions are used for implementing the method according to any one of claims 1 to 13.

29. A computer program product, comprising computer-readable instructions, wherein the computer-readable instructions are used for implementing the method according to any one of claims 1 to 13.

FIG. 1

Query

Cloud services layer

Metadata cluster

Partition
metadata

Trigger cache
consistency synchronization

Optimizer

Metadata cache

Virtual warehouse

Node

Executor

Data
cache

Node

Executor

Data
cache

Virtual warehouse

Node

Executor

Data
cache

Node

Executor

Data
cache

Data
partition 1

Data
partition 2

...

Data
partition n

Storage
layer

FIG. 2

Data analysis system 10

FIG. 3

| trx_header | group_id | col_id | col_min | col_max | ... |
|---|---|---|---|---|---|
| | group0 | c1 | | | |
| | group0 | c2 | | | |
| | ... | ... | | | |

| trx_header | group_id | col_id | block_id | block_max | block_min | ... |
|---|---|---|---|---|---|---|
| | group0 | c1 | 1001 | | | |
| | group0 | c2 | 1001 | | | |
| | group0 | c1 | 1002 | | | |
| | group0 | c2 | 1002 | | | |
| | ... | ... | ... | | | |

FIG. 4

EP 4 617 901 A1

EP 4 617 901 A1

```
                        ┌─────────────┐
                        │  Root node  │
                        └──────▲──────┘
             ┌─────────────────┴─────────────────┐
    ┌────────────────┐                   ┌────────────────┐
    │  Metadata of a │                   │  Metadata of a │
    │  group 3 in a  │                   │  group 6 in a  │
    │    column 1    │                   │    column 2    │
    └───────▲────────┘                   └───────▲────────┘
      ┌─────┴─────┐                         ┌─────┴─────┐
```

| Metadata of a group 1 in the column 1 | Metadata of a group 2 in the column 1 | Metadata of a group 4 in the column 2 | Metadata of a group 5 in the column 2 |

| Metadata of a block 1 in the column 1 | Metadata of a block 2 in the column 1 | Metadata of a block 3 in the column 1 | Metadata of a block 4 in the column 1 | Metadata of a block 5 in the column 1 | Metadata of a block 6 in the column 1 | Metadata of a block 1 in the column 2 | Metadata of a block 2 in the column 2 | Metadata of a block 3 in the column 2 | Metadata of a block 4 in the column 2 | Metadata of a block 5 in the column 2 | Metadata of a block 6 in the column 2 |

FIG. 5

```
┌──────────────┐        ┌──────────────┐        ┌──────────────┐
│ Coordinator  │        │  Metadata    │        │   Target     │
│    node      │        │ management   │        │  computing   │
│    100       │        │ apparatus 200│        │  cluster     │
└──────┬───────┘        └──────┬───────┘        └──────┬───────┘
       │                       │                       │
┌──────┴──────────────┐ S602   │                       │
│ Receive a query     │        │                       │
│ statement           │        │                       │
└──────┬──────────────┘        │                       │
       │                       │                       │
       │ S604: The coordinator node 100                │
       │       delivers a consistency                  │
       │       determining request                     │
       │──────────────────────▶│                       │
       │         ┌─────────────┴─────────────┐ S606    │
       │         │ Determine, based on a     │         │
       │         │ conditional predicate in  │         │
       │         │ the consistency           │         │
       │         │ determining request,      │         │
       │         │ metadata to be read by    │         │
       │         │ the query statement       │         │
       │         └─────────────┬─────────────┘         │
       │         ┌─────────────┴─────────────┐ S608    │
       │         │ Determine a query         │         │
       │         │ condition based on the    │         │
       │         │ metadata to be read by    │         │
       │         │ the query statement       │         │
       │         └─────────────┬─────────────┘         │
       │         ┌─────────────┴─────────────┐ S610    │
       │         │ Determine a status of a   │         │
       │         │ metadata cache based on   │         │
       │         │ the query condition, to   │         │
       │         │ obtain a consistency      │         │
       │         │ determining result        │         │
       │         └─────────────┬─────────────┘         │
       │ S612: The metadata management                 │
       │       apparatus 200 returns the               │
       │       consistency determining result          │
       │◀──────────────────────│                       │
┌──────┴──────────────────┐ S614│                       │
│ Determine the target    │     │                       │
│ computing cluster from  │     │                       │
│ a plurality of          │     │                       │
│ computing clusters 300  │     │                       │
│ based on the            │     │                       │
│ consistency             │     │                       │
│ determining result      │     │                       │
└──────┬──────────────────┘     │                       │
       │ S616: The coordinator node 100 delivers an    │
       │       analysis request to                     │
       │       the target computing cluster      S618  │
       │──────────────────────────────────────────────▶│
       │                       │          ┌─────────────┴─────────────┐
       │                       │          │ Perform data analysis     │
       │                       │          │ according to the          │
       │                       │          │ analysis request          │
       │                       │          └─────────────┬─────────────┘
       │                       │                       │
```

FIG. 6

Concurrent transactions

Group metadata corresponding to the table t1

| T1 | Time sequence | T2 |
|---|---|---|
| BEGIN<br><br>Select * from t1 where id > 20;<br><br><br><br>Select * from t2 where id > 20;<br><br><br><br>Select * from t1 where id < 1000; | | BEGIN<br><br><br>Insert into t1<br><br>    Select * from t4;<br>Commit |

| trx_header | group_id | col_id | col_min | col_max | ... |
|---|---|---|---|---|---|
| 1 | g0 | c1 | 34 | 56 | ... |
| 10 | g1 | c1 | 67 | 100 | ... |
| 13 | g2 | c1 | 35 | 69 | ... |

Data content at the beginning of the transaction T1

Data added at the end of the transaction T2

Cache Status

| trx_header | group_id | col_id | cluster_id | dn_id | ... |
|---|---|---|---|---|---|
| 1 | g0 | c1 | 1 | 1 | ... |
| 10 | g1 | c1 | 1 | 2 | ... |
| 1 | g2 | c1 | 2 | 2 | ... |

FIG. 7

Coordinator node 100

Optimizer

1. Deliver a conditional predicate

4. Return a consistency determining result
    4.1 Consistent group_id, col_id, cluster_id, and dn_id
    4.2 group_id and col_id that are not cached in the DN

Metadata management apparatus 200

Executor

2. Query:
    2.1 An isolation level for visibility is met
    2.2 The conditional predicate is met

group metadata

| trx_header | group_id | col_id | col_min | col_max | ... |
|---|---|---|---|---|---|
|  |  |  |  |  |  |
|  |  |  |  |  |  |

3. trx_header in the group metadata serves as version
information and constitutes a key together with group_id and
col_id, to query a cache status:
    3.1 Not found → Latest data is not cached in a DN
    3.2 Found → Cache data is consistent

Cache Status

| version | group_id | col_id | cluster_id | dn_id | ... |
|---|---|---|---|---|---|
| 13 | g1 | c1 | 1 | 1 |  |
|  |  |  |  |  |  |

FIG. 8

Coordinator node 100

Optimizer

1. Deliver a conditional predicate

Metadata management apparatus 200

Executor

2. Query:
2.1 An isolation level for visibility is met
2.2 The conditional predicate is met

group metadata

| trx_header | group_id | col_id | col_min | col_max | ... |
|---|---|---|---|---|---|
| 1 | 1 | 1 | 1 | 100 | |
| | | | | | |

block metadata

| trx_header | group_id | col_id | block_id | block_max | block_min | ... |
|---|---|---|---|---|---|---|
| | | | | | | |
| | | | | | | |

Cache Status

| version | block_id | col_id | cluster_id | dn_id | ... |
|---|---|---|---|---|---|
| 13 | 1 | C1 | 1 | 1 | |
| | | | | | |

FIG. 9

Coordinator node 100

Optimizer

5. Calculate a cost: Cost=min{baseCost(cluster1)+cluster1 Cache cardinality
*CacheCost, baseCost(cluster2)+cluster2 Cache cardinality*CacheCost}

1. Deliver a conditional predicate

4. Return a consistency determining result
    4.1 Consistent group_id, col_id, cluster_id, and dn_id
    4.2 group_id and col_id information that is not cached in the DN

6. Deliver an execution plan

Metadata management apparatus 200

Executor

2. Query:
    2.1 An isolation level for visibility is met
    2.2 The conditional predicate is met

group metadata

| trx_header | group_id | col_id | col_min | col_max | ... |
|---|---|---|---|---|---|
| 1 | 1 | 1 | 1 | 100 | |
| | | | | | |

3. trx_header in the group metadata serves as version information and
constitutes a key together with group_id and col_id, to query a cache status:
    3.1 Not found → Latest data is not cached in a DN
    3.2 Found → Cache data is consistent

Cache Status

| version | group_id | col_id | cluster_id | dn_id | ... |
|---|---|---|---|---|---|
| 13 | g1 | c1 | 1 | 1 | |
| | | | | | |

Computing cluster 300
(cluster 1)

Data node
(DN 1)

Metadata
cache

Data node
(DN 2)

Metadata
cache

Computing cluster 300
(cluster 2)

Data node
(DN 1)

Metadata
cache

Data node
(DN 2)

Metadata
cache

FIG. 10

| block_id | block_min | block_max | ... |
|---|---|---|---|
| 10032 | 1 | 10 | ... |
| 10037 | 0 | 34 | ... |
| ... | ... | ... | ... |

Block metadata record belonging to g0

**Group metadata record**

| trx_header | group_id | col_id | ... |
|---|---|---|---|
| 10 | g0 | c1 | |

| block_id | block_min | block_max | ... |
|---|---|---|---|
| 10087 | 56 | 58 | ... |
| 10053 | 34 | 36 | ... |
| ... | ... | ... | ... |

Block metadata record belonging to g5

| trx_header | group_id | col_id | ... |
|---|---|---|---|
| 5 | g5 | c2 | |

| block_id | block_min | block_max | ... |
|---|---|---|---|
| 10087 | 19 | 56 | ... |
| 10053 | 34 | 69 | ... |
| ... | ... | ... | ... |

Block metadata record belonging to g7

| trx_header | group_id | col_id | ... |
|---|---|---|---|
| 15 | g7 | d1 | |

| trx_header | group_id | col_id | ... |
|---|---|---|---|
| ... | ... | ... | ... |

| block_id | block_min | block_max | ... |
|---|---|---|---|
| ... | ... | ... | ... |

FIG. 11

**Metadata management apparatus 200 (cluster 0)**

Cache Status

| version | group_id | col_id | cluster_id | dn_id | ... |
|---------|----------|--------|------------|-------|-----|
| 13 | g1 | c1 | 1 | 1 | |
| | | | | | |

Background thread

1. Collect statistics on grouping based on cluster_id/dn_id
2. Collect statistics on an expired status record
3. Collect statistics on a memory watermark
4. Clear the expired status record
5. Clear a status record beyond the watermark

**Computing cluster 300 (cluster 1)**

6. Trigger cache eviction

| block_id | block_min | block_max | ... |
|----------|-----------|-----------|-----|
| 10032 | 1 | 10 | ... |
| 10037 | 0 | 34 | ... |
| ... | ... | ... | ... |

Block metadata record belonging to g0

Group metadata record

| trx_header | group_id | col_id | ... |
|------------|----------|--------|-----|
| 10 | g0 | c1 | |

| block_id | block_min | block_max | ... |
|----------|-----------|-----------|-----|
| 10087 | 56 | 58 | ... |
| 10053 | 34 | 36 | ... |
| ... | ... | ... | ... |

Block metadata record belonging to g5

| trx_header | group_id | col_id | ... |
|------------|----------|--------|-----|
| 5 | g5 | c2 | |

| block_id | block_min | block_max | ... |
|----------|-----------|-----------|-----|
| 10087 | 19 | 56 | ... |
| 10053 | 34 | 69 | ... |
| ... | ... | ... | ... |

Block metadata record belonging to g7

| trx_header | group_id | col_id | ... |
|------------|----------|--------|-----|
| 15 | g7 | d1 | |

| trx_header | group_id | col_id | ... |
|------------|----------|--------|-----|
| ... | ... | ... | ... |

| block_id | block_min | block_max | ... |
|----------|-----------|-----------|-----|
| ... | ... | ... | ... |

FIG. 12

Metadata management apparatus 200

Cache Status

| version | group_id | col_id | cluster_id | dn_id | ... |
|---------|----------|--------|------------|-------|-----|
| 13 | g0 | c1 | 1 | 1 | ... |
|  |  |  |  |  |  |
|  |  |  |  |  |  |
|  |  |  |  |  |  |

group metadata

| trx_header | group_id | col_id | col_min | col_max | mode | ... |
|------------|----------|--------|---------|---------|------|-----|
| 13 | g0 | c1 | 34 | 56 | 'update' |  |
| 10 | g1 | c2 | 67 | 100 |  |  |
| 3 | g0 | c1 | 34 | 69 |  |  |
|  |  |  |  |  |  |  |
|  |  |  |  |  |  |  |

block metadata

| trx_header | group_id | col_id | block_id | block_max | block_min | ... |
|------------|----------|--------|----------|-----------|-----------|-----|
| ... | g0 | c1 | 1001 | ... | ... | ... |
| 10 | g1 | c2 | 1001 | ... | ... | ... |
| ... |  |  |  | ... | ... | ... |

Computing cluster 300

DN

Cache

DN

Cache

Incremental cache

DN

Cache

Incremental cache

DN

Cache

Computing cluster 300

DN

Cache

Incremental cache

DN

Cache

Incremental cache

DN

Cache

DN

Cache

FIG. 13

EP 4 617 901 A1

EP 4 617 901 A1

**Metadata management apparatus 200**

Cache Status

| version | group_id | col_id | cluster_id | dn_id | ... |
|---------|----------|--------|------------|-------|-----|
| 13 | g0 | c1 | 1 | 1 | |

group metadata

| trx_header | group_id | col_id | col_min | col_max | mode | ... |
|------------|----------|--------|---------|---------|------|-----|
| 13 | g0 | c1 | 34 | 56 | 'update' | |
| 10 | g1 | c2 | 67 | 100 | | |
| 3 | g0 | c1 | 34 | 69 | | |

block metadata

| trx_header | group_id | col_id | block_id | block_max | block_min | ... |
|------------|----------|--------|----------|-----------|-----------|-----|
| ... | g0 | c1 | 1001 | ... | ... | ... |
| 10 | g1 | c2 | 1001 | ... | ... | ... |
| ... | g0 | c1 | 1002 | ... | ... | ... |
| ... | g0 | c1 | 1002 | ... | ... | ... |
| ... | ... | ... | ... | ... | ... | ... |

Modify

Coordinator node 100

Computing cluster 300

| DN | DN |
|----|----|
| New block metadata | New block metadata |

| DN | DN |
|----|----|
| New block metadata | New block metadata |

FIG. 14

Client ——— Query ————————————————————————————————————————————→

Coordinator
node 100 ————————————————————————————————————————————————————→

Optimization and
partition-based pruning

Cost assessment and
computing cluster
selection

Conditional
predicate

Visibility
determining
and pruning

Cache
consistenc
y
determinin
g

Cache
consistency
determining
result

Metadata
management
apparatus
200 ———————————————————————————————————————————————————→

group metadata

block metadat

Cache Status

Cache
consistency
synchronization

Node 1 in a
computing
cluster 300 ————————————————————————————————————————————→

Cache

Node 2 in the
computing
cluster 300 ————————————————————————————————————————————→

Cache

FIG. 15

EP 4 617 901 A1

FIG. 16

| Processor 1604 | | Communication interface 1608 |
|---|---|---|

Bus
1602

Memory 1606

| Coordinator node 100 | Computing cluster 300 |
|---|---|

Metadata management apparatus 200

Computing device 1600

FIG. 17

FIG. 18

FIG. 19

EP 4 617 901 A1

## INTERNATIONAL SEARCH REPORT

| International application No. |
| --- |
| **PCT/CN2023/121360** |

### A.  CLASSIFICATION OF SUBJECT MATTER

G06F 16/242(2019.01)i

According to International Patent Classification (IPC) or to both national classification and IPC

### B.  FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS, DWPI, CNTXT, ENTXT, ENTXTC, CNKI: 分析, 协调, 元数据, 集群, 缓存, 一致性, analysis, coordinate, metadata, cluster, cache, consistency

### C.  DOCUMENTS CONSIDERED TO BE RELEVANT

| Category* | Citation of document, with indication, where appropriate, of the relevant passages | Relevant to claim No. |
| --- | --- | --- |
| Y | CN 108875042 A (AGRICULTURAL BANK OF CHINA) 23 November 2018 (2018-11-23) description, paragraphs [0039]-[0064] | 1-29 |
| Y | CN 114218236 A (CAI CHENGZHAO) 22 March 2022 (2022-03-22) description, paragraphs [0032]-[0064] | 1-29 |
| A | CN 112241480 A (WUXI MADARAME TECHNOLOGY CO., LTD.) 19 January 2021 (2021-01-19) entire document | 1-29 |
| A | US 2020195718 A1 (IBM) 18 June 2020 (2020-06-18) entire document | 1-29 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 December 2023** | **13 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/121360** |

| Patent document cited in search report | | | Publication date (day/month/year) | Patent family member(s) | | | Publication date (day/month/year) |
| --- | --- | --- | --- | --- | --- | --- | --- |
| CN | 108875042 | A | 23 November 2018 | CN | 108875042 | B | 08 June 2021 |
| CN | 114218236 | A | 22 March 2022 | None | | | |
| CN | 112241480 | A | 19 January 2021 | None | | | |
| US | 2020195718 | A1 | 18 June 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211565695